# EUROPEAN PATENT APPLICATION

(11) **EP 4 832 197 A1**
(43) Date of publication of application: **28.10.2026**
(21) Application number: 24923268.7
(22) Date of filing: 27.08.2024
(51) Int. Cl.: H01M 50/244

(54) **BATTERY CELL, BATTERY, AND ELECTRICAL APPARATUS**

(30) Priority: 07.02.2024 CN 202420289003 U
(71) Applicant: Contemporary Amperex Technology Co., Limited, Ningde, Fujian 352100 (CN)
(72) Inventor: BAI, Hualei, Ningde, Fujian 352100 (CN); ZHENG, Yulian, Ningde, Fujian 352100 (CN); HUANG, Shoujun, Ningde, Fujian 352100 (CN); SU, Huasheng, Ningde, Fujian 352100 (CN); CHEN, Xinxiang, Ningde, Fujian 352100 (CN); PENG, Xinying, Ningde, Fujian 352100 (CN)
(74) Representative: Kraus & Lederer PartGmbB
(86) International application number: PCT/CN2024/114871
(87) International publication number: WO 2025/167058

(57) **Abstract**

A battery cell (10), a battery (1), and an electric apparatus. In the battery cell (10), an insulating housing (13) comprises a base piece (131), main folding pieces (132), and side folding pieces (133). On a first side (135), transition corners (136) are connected to the main folding pieces (132) by means of first fold lines (1361) and connected to the side folding pieces (133) by means of second fold lines (1362), the base piece (131) is connected to extension folding pieces (134) by means of third fold lines (1341), the third fold lines (1341) are staggered with the straight lines where the first fold lines (1361) are located and/or staggered with the straight lines where the second fold lines (1362) are located when the insulating housing (13) is in an unfolded state, and the extension folding pieces (134) cover gaps between the corresponding side folding pieces (133) and the base piece (131). On this basis, the insulation effect of the insulating housing (13) can be improved.

## Description

### CROSS-REFERENCE TO RELATED APPLICATIONS

This application claims priority to Chinese Patent Application No. 202420289003.0, filed with the China National Intellectual Property Administration on February 07, 2024 and entitled "BATTERY CELL, BATTERY, AND ELECTRIC APPARATUS", which is incorporated herein by reference in its entirety.

### TECHNICAL FIELD

Embodiments of this application relate to the field of batteries, and in particular, to a battery cell, a battery, and an electric apparatus.

### BACKGROUND

In some cases, a battery cell includes a housing, an electrode assembly group accommodated in the housing, and an insulating shell covering an outer surface of the electrode assembly group, where the insulating shell is configured to insulate and isolate the electrode assembly group from the housing. However, a gap is present at seam positions of the insulating shell, affecting the insulation effect.

### SUMMARY

Embodiments of this application provide a battery cell, a battery, and an electric apparatus, aiming to solve a problem that a gap at seam positions of an insulating shell affects the insulation effect.

To achieve the foregoing objective, the following technical solutions are used in the embodiments of this application.

According to a first aspect, a battery cell is provided, where the battery cell includes:
a housing;
an electrode assembly group accommodated in the housing, where the electrode assembly group includes one or more electrode assemblies arranged side by side; and
an insulating shell including a base piece, main folding pieces, and side folding pieces, where the base piece supports the electrode assembly group, two main folding pieces are provided and are respectively arranged on two opposite sides of the base piece along a first direction to respectively wrap two opposite sides of the electrode assembly group along the first direction; the insulating shell has a first side along a second direction, the second direction being perpendicular to the first direction; and
on the first side: at least one of the main folding pieces is connected to the side folding piece via a transition corner, the side folding piece wraps a corresponding side of the electrode assembly group, the transition corner is connected to the main folding piece via a first fold line and is connected to the side folding piece via a second fold line, the base piece is connected to an extension folding piece via a third fold line; when the insulating shell is in an unfolded state, the third fold line is offset from a straight line on which the first fold line is located, and/or is offset from a straight line on which the second fold line is located; and the extension folding piece is folded to a corresponding side of the electrode assembly group and covers a gap between the corresponding side folding piece and the base piece.

In the battery cell according to the embodiments of this application, the insulating shell can support the electrode assembly group through the base piece and wrap two opposite sides of the electrode assembly group along the first direction respectively through the two main folding pieces respectively arranged on two opposite sides of the base piece along the first direction. On this basis, on the first side, the insulating shell may further wrap the corresponding side of the electrode assembly group via the side folding piece connected to at least one main folding piece, and have the extension folding piece, connected to the base piece, folded to the corresponding side surface of the electrode assembly group to cover the gap between the corresponding side folding piece and the base piece, so that at the gap between the corresponding side folding piece and the base piece, the extension folding piece can effectively insulate and isolate the electrode assembly group from the housing. Based on this, the insulating shell that provides relatively full and reliable wrapping can reliably wrap the outside of the electrode assembly group and reliably insulate and isolate the electrode assembly group from the housing, thereby improving the insulation effect of the insulating shell between the electrode assembly group and the housing, reducing the risk of the electrode assembly group coming into contact with the housing through the seam gap of the insulating shell, and reducing the risk of corrosion of the housing caused by direct contact between the electrode assembly group and the housing.

Moreover, in this embodiment, on the first side, by arranging the third fold line to be offset from the straight line on which at least one of the first fold line or the second fold line is located when the insulating shell is in an unfolded state, the extension folding piece can be smoothly bent to the corresponding side surface of the electrode assembly group, reducing the risk of mutual interference between the extension folding piece and the corresponding side folding piece. Moreover, in a case that the extension folding piece is bent along the third fold line to the corresponding side surface of the electrode assembly group, the extension folding piece can also be brought closer to the corresponding side folding piece, thereby reducing the risk of a large gap between the extension folding piece and the corresponding side folding piece, optimizing the insulation effect of the side folding piece and the extension folding piece together on the first side, and optimizing the insulation effect of the insulating shell between the electrode assembly group and the housing.

In some embodiments, when the insulating shell is in an unfolded state, the third fold line is located between the straight line on which the first fold line is located and the straight line on which the second fold line is located.

With the above solution, when the insulating shell is in an unfolded state, the third fold line is located between the straight line on which the first fold line is located and the straight line on which the second fold line is located, so that the extension folding piece can be smoothly and successfully bent to the corresponding side surface of the electrode assembly group, reducing the risk of interference between the extension folding piece and the corresponding side folding piece. Moreover, in a case that the extension folding piece is bent along the third fold line to the corresponding side surface of the electrode assembly group, the extension folding piece, especially a corner region between the extension folding piece and the base piece, can also be brought closer to the corresponding side folding piece, thereby reducing the risk of a gap or seam between the extension folding piece (especially the corner region between the extension folding piece and the base piece) and the corresponding side folding piece, optimizing the insulation effect of the side folding piece and the extension folding piece together on the first side, and optimizing the insulation effect of the insulating shell between the electrode assembly group and the housing. This embodiment is particularly applicable to a case "the extension folding piece is folded to an outer side of the corresponding side folding piece".

In some embodiments, the extension folding piece is folded to an outer side of the corresponding side folding piece.

With the above solution, in a case that the side folding pieces, the main folding pieces, and the base piece cooperate to wrap the electrode assembly group, the extension folding piece can be folded to the outer side of the corresponding side folding piece to reliably cover the gap between the corresponding side folding piece and the base piece via the extension folding piece. On this basis, bending of the extension folding piece is facilitated, especially connection and fixation of the side folding piece to the extension folding piece are facilitated. This can visually optimize the effect of the extension folding piece covering the gap between the side folding piece and the base piece, and reduce the risk of the extension folding piece not fully covering the gap. As a result, the folding convenience of the insulating shell can be improved, the structural reliability and structural stability of the insulating shell in a wrapping state can be improved, the risk of the insulating shell falling apart can be reduced, and the insulation effect of the insulating shell between the electrode assembly group and the housing can be optimized. In addition, by folding the extension folding piece to the outer side of the corresponding side folding piece, the side folding piece can closely fit and wrap the corresponding side surface of the electrode assembly group, allowing the side folding piece to better insulate and wrap the corresponding side surface of the electrode assembly group.

In some embodiments, on the first side, both of the two main folding pieces are connected to the side folding pieces via the transition corners, and the two side folding pieces together wrap the corresponding side of the electrode assembly group.

With the above solution, in a wrapping state of the insulating shell, on the first side, the two side folding pieces respectively connected to the two main folding pieces can be bent to a same side surface of the electrode assembly group and together wrap the corresponding side surface of the electrode assembly group. On this basis, the operational convenience of bending the two side folding pieces toward each other and wrapping the same side surface of the electrode assembly group can be improved, thereby improving the convenience of folding the insulating shell and improving the convenience of assembling the insulating shell and the electrode assembly group. Moreover, the connection seam between the two side folding pieces can be positioned at the middle of the corresponding side surface of the electrode assembly group. This can improve the connection strength between the two side folding pieces, balance the stress on the two side folding pieces when the electrode assembly group swells, reduce the risk of the two side folding pieces falling apart or being pushed apart, and enable the two side folding pieces to securely and stably insulate and wrap the corresponding side surface of the electrode assembly group. As a result, the insulation wrapping effect of the two side folding pieces together on the corresponding side surface of the electrode assembly group can be improved, and the insulation effect of the insulating shell between the electrode assembly group and the housing can be optimized.

In some embodiments, the extension folding piece is folded to outer sides of the two side folding pieces.

With the above solution, on the first side, in a case that the two side folding pieces together wrap the corresponding side surface of the electrode assembly group, the extension folding piece can be folded to the outer sides of the two side folding pieces to reliably cover a gap between the two side folding pieces and the base piece via the extension folding piece. On this basis, bending of the extension folding piece is facilitated, especially connection and fixation of the extension folding piece to the two side folding pieces are facilitated. This can visually optimize the effect of the extension folding piece covering the gap between the two side folding pieces and the base piece, and reduce the risk of the extension folding piece not fully covering the gap. As a result, the folding convenience of the insulating shell can be improved, the structural reliability and structural stability of the insulating shell in a wrapping state can be improved, the risk of the insulating shell falling apart can be reduced, and the insulation effect of the insulating shell between the electrode assembly group and the housing can be optimized. In addition, by folding the extension folding piece to the outer sides of the two side folding pieces, the two side folding pieces can reliably, fully, and closely wrap the corresponding side surface of the electrode assembly group, allowing the two side folding pieces to better insulate and wrap the corresponding side surface of the electrode assembly group.

In some embodiments, on the first side, the two side folding pieces are a first side folding piece and a second side folding piece, and part of the first side folding piece is folded to an outer side of the second side folding piece.

With the above solution, in a wrapping state of the insulating shell, on the first side, the first side folding piece and the second side folding piece whose projections partially overlap along the second direction together wrap the corresponding side surface of the electrode assembly group. On this basis, the first side folding piece can create a pressing effect on the second side folding piece via the part stacked to the outer side of the second side folding piece, thereby enhancing the connection strength between the first side folding piece and the second side folding piece. This helps maintain the shapes of the first side folding piece and the second side folding piece when the electrode assembly group swells, reduces the risk of the first side folding piece and the second side folding piece falling apart or being pushed apart, and allows the first side folding piece and the second side folding piece to reliably, durably, and fully insulate and wrap the corresponding side surface of the electrode assembly group. As a result, the insulation wrapping effect of the first side folding piece and the second side folding piece on the corresponding side surface of the electrode assembly group can be optimized, and the insulation effect of the insulating shell between the electrode assembly group and the housing can be optimized. Moreover, in a wrapping state of the insulating shell, even if there are machining errors in the dimensions of the electrode assembly group, the first side folding piece, and the second side folding piece along the first direction, the overlapping part between the first side folding piece and the second side folding piece allows the first side folding piece and the second side folding piece to accommodate dimensional deviations within a certain range and to still fully insulate and wrap the corresponding side surface of the electrode assembly group, thereby improving the dimensional compatibility, applicability, and reliability of the insulating shell.

In some embodiments, the part of the first side folding piece folded to the outer side of the second side folding piece is provided with a first notch.

With the above solution, in a wrapping state of the insulating shell, on the first side, the part of the first side folding piece folded to the outer side of the second side folding piece allows a corresponding region of the second side folding piece to be exposed via the first notch, so that an adhesive structure (for example, an adhesive tape) can run through the first notch to reliably and securely bond and fix the first side folding piece and the second side folding piece. On this basis, the connection convenience, connection reliability, and connection strength between the first side folding piece and the second side folding piece can be improved, the risk of the first side folding piece and the second side folding piece falling apart can be reduced, and the first side folding piece and the second side folding piece are allowed to reliably and durably insulate and wrap the corresponding side surface of the electrode assembly group. As a result, the insulation wrapping effect of the first side folding piece and the second side folding piece on the corresponding side surface of the electrode assembly group can be optimized, and the insulation effect of the insulating shell between the electrode assembly group and the housing can be optimized.

In some embodiments, the extension folding piece is folded to the outer sides of the first side folding piece and the second side folding piece, or the extension folding piece is folded to between the first side folding piece and the second side folding piece; and the first notch is provided at an end of the first side folding piece close to the extension folding piece, and part of the first notch is exposed outside the extension folding piece.

With the above solution, in a case that the extension folding piece is folded to the outer side of the first side folding piece or the extension folding piece is folded between the first side folding piece and the second side folding piece, the first notch may be provided at an end of the first side folding piece close to the extension folding piece, and part of the first notch may be exposed outside the extension folding piece, allowing a corresponding region of the second side folding piece to be exposed via the part of the first notch exposed outside the extension folding piece. On this basis, near the first notch, the first side folding piece, the second side folding piece, and the extension folding piece each have an exposed part, allowing an adhesive structure (for example, an adhesive tape) to run through the first notch to reliably and securely bond and fix the first side folding piece, the second side folding piece, and the extension folding piece. This improves the connection convenience, connection reliability, and connection strength of the first side folding piece, the second side folding piece, and the extension folding piece, reduces the risk of the first side folding piece, the second side folding piece, and the extension folding piece falling apart, and allows the first side folding piece, the second side folding piece, and the extension folding piece to reliably and durably insulate and wrap the corresponding side surface of the electrode assembly group. As a result, the insulation wrapping effect of the first side folding piece, the second side folding piece, and the extension folding piece can be optimized, and the insulation effect of the insulating shell can be optimized.

In some embodiments, the first notch is provided at a corner of the first side folding piece close to the extension folding piece.

With the above solution, by forming the first notch at the corner of the first side folding piece close to the extension folding piece, the first notch can be conveniently formed by cutting or machining, facilitating processing of the first notch and accurate control over the dimension of the first notch. Moreover, since the first notch is provided at the corner, the impact of the processing of the first notch on the structural strength of the first side folding piece can be reduced, the risk of cracking or cracks occurring in the first side folding piece near the first notch can be reduced, and the insulation wrapping effect and service life of the first side folding piece can be maintained.

In some embodiments, along a direction perpendicular to the third fold line, a dimension of the extension folding piece is in a range of 5 mm to 15 mm.

With the above solution, by setting the dimension of the extension folding piece along the direction perpendicular to the third fold line to be in a range of 5 mm to 15 mm, in a case that the extension folding piece is folded to the corresponding side surface of the electrode assembly group, the gap between the corresponding side folding piece and the base piece can be reliably covered. Moreover, the dimension of the extension folding piece can be correspondingly constrained to reduce the usage amount of adhesive structures (for example, adhesive tapes) used for fixing the extension folding piece, and reduce the risk of edge warping of the extension folding piece after fixation.

In some embodiments, a second notch is provided between the extension folding piece and the adjacent side folding piece.

With the above solution, by providing the second notch between the extension folding piece and its adjacent side folding piece, when the extension folding piece is being folded to the corresponding side surface of the electrode assembly group, the pulling effect of the extension folding piece on the adjacent side folding piece can be reduced, thereby optimizing the folding convenience and folding quality of the insulating shell and improving the folding flatness and precision of the extension folding piece and the side folding piece. In addition, the provision of the second notch also helps to reduce stress concentration in a region where the side folding piece is adjacent to the extension folding piece, thereby reducing the risk of deformation or rupture in the region where the side folding piece is adjacent to the extension folding piece, and optimizing the structural strength and service life of the side folding piece.

In some embodiments, at least one corner of the base piece is a rounded corner.

With the above solution, by arranging at least one corner of the base piece as a rounded corner, during assembly of the electrode assembly group and the insulating shell, the risk of interference between the base piece of the insulating shell and the bottom surface of the electrode assembly group can be reduced; and during assembly of the insulating shell and the housing, the risk of interference between the corner of the base piece of the insulating shell and the housing can be reduced. As a result, the assembly convenience of the insulating shell with the electrode assembly group and the housing can be improved, the risk of damage to the corner of the insulating shell caused by friction, impact, or shock during assembly can be reduced, the risk of damage to the insulating shell during assembly can be reduced, and the service performance and service life of the insulating shell can be improved.

In some embodiments, a corner of the base piece adjacent to the extension folding piece is a rounded corner; and
along the first direction, a width of the extension folding piece is equal to a width of the base piece minus dimensions of two corners of the base piece adjacent to the extension folding piece.

With the above solution, by setting the width of the extension folding piece along the first direction to be equal to the width of the base piece minus the dimension of one corner of the base piece adjacent to the extension folding piece and then minus the dimension of the other corner of the base piece adjacent to the extension folding piece, the extension folding piece can fully cover the gap between the corresponding edge of the base piece and the corresponding side folding piece. On this basis, the effect of the extension folding piece covering the gap between the side folding piece and the base piece can be optimized, and the risk of the extension folding piece not fully covering the gap can be reduced. This can optimize the insulation effect of the side folding piece and the extension folding piece together on the first side, and optimize the insulation effect of the insulating shell between the electrode assembly group and the housing.

In some embodiments, the extension folding piece, a corner of the base piece adjacent to the extension folding piece, and the side folding piece adjacent to the extension folding piece together enclose the second notch.

With the above solution, on the basis of the previous embodiment, the extension folding piece, the corner of the base piece arranged adjacent to the extension folding piece, and the side folding piece arranged adjacent to the extension folding piece can together enclose the second notch. On this basis, when the extension folding piece is being folded to the corresponding side surface of the electrode assembly group, the pulling effect of the extension folding piece on the adjacent side folding piece can be reduced, thereby optimizing the folding convenience and folding quality of the insulating shell and improving the folding flatness and precision of the extension folding piece and the side folding piece. Moreover, the second notch can be formed by utilizing the dimension of the extension folding piece, the corner of the base piece, and the side folding piece, without requiring additional material removal, thereby improving the formation convenience of the second notch and optimizing the overall structure of the insulating shell. In addition, the provision of the second notch also helps to reduce stress concentration in regions where the side folding piece is adjacent to the corner of the base piece and the extension folding piece, thereby reducing the risk of deformation or rupture in the regions where the side folding piece is adjacent to the corner of the base piece and the extension folding piece, and optimizing the structural strength and service life of the insulating shell.

In some embodiments, at least one end of the first fold line in an extension direction of the first fold line is spaced apart from a corresponding edge side of the main folding piece.

With the above solution, by arranging at least one end of the first fold line in its extension direction to be spaced apart from the corresponding edge side of the main folding piece, the first fold line does not extend through the main folding piece in its extension direction. On this basis, a strong connection strength can be provided between the main folding piece and the transition corner in a region where the first fold line does not extend, the connection strength, connection reliability, and durability between the main folding piece and the transition corner can be maintained and improved, and the risk of cracks, cracking, or tearing occurring in the connection region between the main folding piece and the transition corner can be reduced, thereby improving the structural reliability and service life of the insulating shell.

In some embodiments, at least one end of the second fold line in an extension direction of the second fold line is spaced apart from a corresponding edge side of the side folding piece.

With the above solution, by arranging at least one end of the second fold line in its extension direction to be spaced apart from the corresponding edge side of the side folding piece, the second fold line does not extend through the side folding piece in its extension direction. On this basis, a strong connection strength can be provided between the side folding piece and the transition corner in a region where the second fold line does not extend, the connection strength, connection reliability, and durability between the side folding piece and the transition corner can be maintained and improved, and the risk of cracks, cracking, or tearing occurring in the connection region between the side folding piece and the transition corner can be reduced, thereby improving the structural reliability and service life of the insulating shell.

In some embodiments, at least one end of the third fold line in an extension direction of the third fold line is spaced apart from a corresponding edge side of the extension folding piece.

With the above solution, by arranging at least one end of the third fold line in its extension direction to be spaced apart from the corresponding edge side of the extension folding piece, the third fold line does not extend through the extension folding piece in its extension direction. On this basis, a strong connection strength can be provided between the extension folding piece and the base piece in a region where the third fold line does not extend, the connection strength, connection reliability, and durability between the extension folding piece and the base piece can be maintained and improved, and the risk of cracks, cracking, or tearing occurring in the connection region between the extension folding piece and the base piece can be reduced, thereby improving the structural reliability and service life of the insulating shell.

In some embodiments, the extension folding piece is a rectangular structure.

With the above solution, by arranging the extension folding piece as a rectangular structure, the shape of the extension folding piece can be regularized, allowing the extension folding piece to have a regular and relatively large surface area to cover a relatively wide region and reliably cover the gap between the corresponding side folding piece and the base piece. As a result, the effect of the extension folding piece covering the gap between the side folding piece and the base piece can be optimized, and the risk of the extension folding piece not fully covering the gap can be reduced. Moreover, the extension folding piece with a rectangular structure facilitates processing, folding, and installation.

In some embodiments, the transition corner is a rounded corner.

With the above solution, by arranging the transition corner as a rounded corner, a rounded transition connection can be achieved between the connected main folding piece and side folding piece. On this basis, stress concentration between the connected main folding piece and side folding piece can be reduced, and stress can be evenly distributed in the transition region between the connected main folding piece and side folding piece, thereby improving the connection strength and connection reliability between the connected main folding piece and side folding piece, reducing the risk of cracks or cracking occurring in the connection region between the main folding piece and the side folding piece, and optimizing the structural strength and service life of the insulating shell. Moreover, during assembly of the electrode assembly group and the insulating shell, the rounded transition corner can reduce the risk of interference between edges of the insulating shell and the electrode assembly group; during assembly of the insulating shell and the housing, the rounded transition corner can reduce the risk of interference between edges of the insulating shell and the housing. This can reduce the risk of damage to the edges of the insulating shell caused by friction, impact, or shock during assembly, reduce the risk of damage to the insulating shell during assembly, improve the assembly convenience of the insulating shell with the electrode assembly group and the housing, and improve the service performance and service life of the insulating shell.

According to a second aspect, a battery is provided, where the battery includes the battery cell according to the embodiments of this application.

With the above solution, the battery can improve the use reliability and service life of each battery cell by applying the battery cell according to the embodiments of this application, thereby improving the use reliability and service life of the battery.

According to a third aspect, an electric apparatus is provided, where the electric apparatus includes the battery according to the embodiments of this application or the battery cell according to the embodiments of this application.

With the above solution, the electric apparatus can improve the use reliability and service life of the electric apparatus by applying the battery or the battery cell according to the embodiments of this application.

### BRIEF DESCRIPTION OF DRAWINGS

To describe the technical solutions in the embodiments of this application clearly, the following briefly describes the accompanying drawings required for describing the embodiments or the prior art. Apparently, the accompanying drawings in the following description show merely some embodiments of this application, and persons of ordinary skill in the art may still derive other drawings from these accompanying drawings without creative efforts.
FIG. 1 is a schematic structural diagram of a vehicle according to some embodiments of this application;
FIG. 2 is a schematic exploded view of a battery according to some embodiments of this application;
FIG. 3 is a schematic exploded view of a battery cell according to some embodiments of this application;
FIG. 4 is a schematic structural diagram of an insulating shell in an unfolded state according to some embodiments of this application;
FIG. 5 is a schematic structural diagram of an insulating shell when an extension folding piece is not folded according to some embodiments of this application;
FIG. 6 is a schematic structural diagram of an insulating shell in a finished product state according to some embodiments of this application;
FIG. 7 is an enlarged view of region A provided in FIG. 6;
FIG. 8 is an enlarged view of region B provided in FIG. 4.

### Reference signs:

1. battery, 2. controller, 3. motor; 100. battery unit, 200. box, 201. first portion, 202. second portion;
10. battery cell, 11. housing, 111. shell, 112. end cover; 12. electrode assembly group, 121. electrode assembly, 1211. electrode body, 1212. electrode tab, 1212a. positive electrode tab, 1212b. negative electrode tab; 13. insulating shell, 131. base piece, 132. main folding piece, 1321. fourth fold line, 133. side folding piece, 133a. first side folding piece, 1331. first notch, 133b. second side folding piece, 134. extension folding piece, 1341. third fold line, 1342. second notch, 135. first side, 136. transition corner, 1361. first fold line, 1362. second fold line, 14. insulating member; 15. electrode terminal, 15a. positive electrode terminal, 15b. negative electrode terminal; 16. adapter, 16a. positive electrode adapter, 16b. negative electrode adapter; 17. explosion-proof valve; a. first direction, b. second direction, d1. dimension of the extension folding piece along a direction perpendicular to the third fold line, d2. width of the extension folding piece along the first direction, d3. width of the base piece along the first direction, d4. dimension of one corner of the base piece adjacent to the extension folding piece along the first direction; and d5. dimension of another corner of the base piece adjacent to the extension folding piece along the first direction.

### DESCRIPTION OF EMBODIMENTS

To make the technical problem to be resolved, technical solutions, and beneficial effects of this application clearer and more comprehensible, the following describes this application in detail with reference to the accompanying drawings and embodiments. It should be understood that the specific embodiments described herein are merely used to explain this application but are not intended to limit this application.

In the descriptions of this application, it should be understood that the orientations or positional relationships indicated by the terms "length", "width", "upper", "lower", "front", "rear", "left", "right", "perpendicular", "horizontal", "top", "bottom", "inside", "outside", and the like are based on the orientations or positional relationships shown in the accompanying drawings. These terms are merely for ease and brevity of description of this application rather than indicating or implying that the apparatuses or components mentioned must have specific orientations or must be constructed or manipulated according to specific orientations, and therefore shall not be construed as any limitations on this application.

In addition, the terms "first" and "second" are merely for the purpose of description, and shall not be understood as any indication or implication of relative importance or any implicit indication of the number of technical features indicated. Therefore, a feature limited by "first" or "second" may explicitly or implicitly include one or more features. In the description of this application, "a plurality of" means two or more unless otherwise specifically stated.

In the description of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skills in the art can understand specific meanings of these terms in this application as appropriate to specific situations.

A battery cell is the smallest unit for storing and outputting electrical energy. In some cases, the battery cell includes a housing, an electrode assembly group accommodated in the housing, and an insulating shell wrapping an outer surface of the electrode assembly group. The insulating shell is configured to insulate and isolate the electrode assembly group from the housing. However, a gap is present at seam positions between a circumferential side and a bottom of the insulating shell, making the electrode assembly group prone to come into contact with the housing at the gap and causing corrosion of the housing, affecting an insulation effect of the insulating shell between the electrode assembly group and the housing.

In view of this, an embodiment of this application provides a battery cell. An insulating shell of the battery cell may support an electrode assembly group through a base piece and wrap two opposite sides of the electrode assembly group along a first direction respectively through two main folding pieces respectively arranged on two opposite sides of the base piece along the first direction. On this basis, on a first side, the insulating shell may further wrap a corresponding side of the electrode assembly group via a side folding piece connected to at least one main folding piece, and have an extension folding piece, connected to the base piece, folded to a corresponding side surface of the electrode assembly group to cover a gap between the corresponding side folding piece and the base piece, so that at the gap between the corresponding side folding piece and the base piece, the extension folding piece can effectively insulate and isolate the electrode assembly group from the housing. Based on this, the insulating shell that provides relatively full and reliable wrapping can reliably wrap the outside of the electrode assembly group and reliably insulate and isolate the electrode assembly group from the housing, thereby improving the insulation effect of the insulating shell between the electrode assembly group and the housing, reducing the risk of the electrode assembly group coming into contact with the housing through the seam gap of the insulating shell, and reducing the risk of corrosion of the housing caused by direct contact between the electrode assembly group and the housing.

Moreover, in the embodiments of this application, on the first side, by arranging the third fold line to be offset from the straight line on which at least one of the first fold line or the second fold line is located when the insulating shell is in an unfolded state, the extension folding piece can be smoothly bent to the corresponding side surface of the electrode assembly group, reducing the risk of mutual interference between the extension folding piece and the corresponding side folding piece. Moreover, in a case that the extension folding piece is bent along the third fold line to the corresponding side surface of the electrode assembly group, the extension folding piece can also be brought closer to the corresponding side folding piece, thereby reducing the risk of a large gap between the extension folding piece and the corresponding side folding piece, optimizing the insulation effect of the side folding piece and the extension folding piece together on the first side, and optimizing the insulation effect of the insulating shell between the electrode assembly group and the housing.

The battery cell disclosed in the embodiments of this application may be a lithium-ion secondary battery, a lithium-sulfur battery, a sodium-lithium-ion battery, a sodium-ion battery, a magnesium-ion battery, or the like. The battery cell may be cylindrical, flat, cuboid, or of other shapes. The battery cell may adopt different packaging methods to form a cylindrical battery cell, a prismatic battery cell, a pouch battery cell, or the like.

The battery cell disclosed in the embodiments of this application can be used alone, or can be combined with other battery cells to form a modular battery capable of providing higher voltage and capacity, such as a battery module, a battery group, or a battery pack.

The battery cell and battery disclosed in the embodiments of this application may be used in electric apparatuses that use battery cells and batteries as power sources, or in various energy storage systems using battery cells and batteries as energy storage components. The electric apparatus may be but is not limited to a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, and an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer.

To illustrate the technical solutions provided in this application, detailed description is given below with reference to the specific accompanying drawings and embodiments, taking "the electric apparatus being a vehicle" as an example.

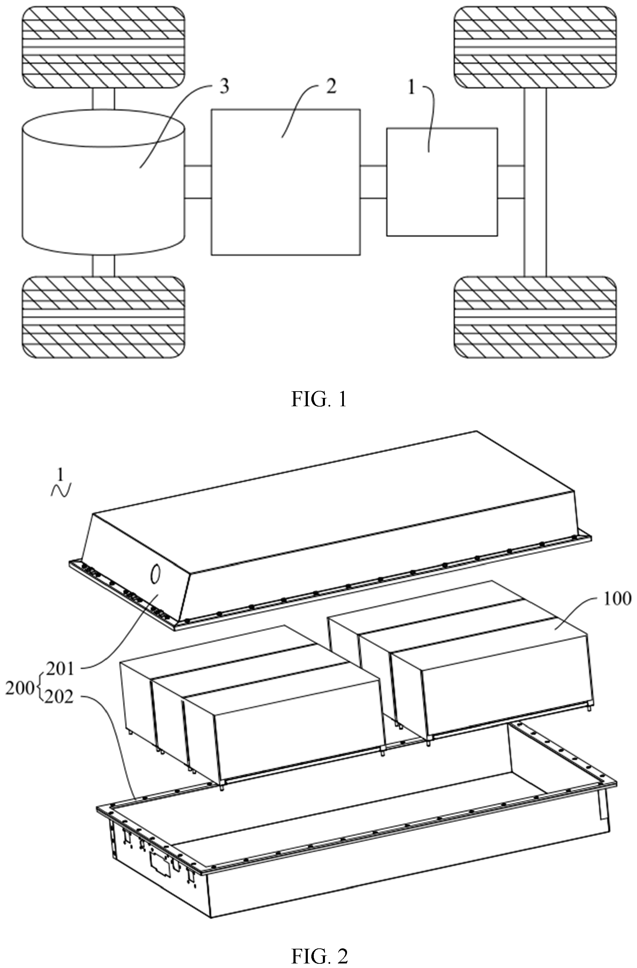

Referring to FIG. 1, FIG. 1 is a schematic structural diagram of a vehicle according to some embodiments of this application. The vehicle may be a fossil fuel vehicle, a natural gas vehicle, or a new energy vehicle. The new energy vehicle may be a battery electric vehicle, a hybrid electric vehicle, a range-extended electric vehicle, or the like. The vehicle is provided with a battery 1 inside, where the battery 1 may be disposed at the bottom, front, or rear of the vehicle. The battery 1 is configured to supply power to the vehicle. For example, the battery 1 may be used as an operational power supply for the vehicle. The vehicle may further include a controller 2 and a motor 3, where the controller 2 is configured to control the battery 1 to supply power to the motor 3, for example, to satisfy power needs of start, navigation, and driving of the vehicle.

In some embodiments of this application, the battery 1 can be used as not only the operational power source for the vehicle but also a driving power source for the vehicle, replacing all or part of the fossil fuel or the natural gas to provide driving power for the vehicle.

Referring to FIG. 2, FIG. 2 is a schematic exploded view of a battery 1 according to some embodiments of this application. The battery 1 includes a battery unit 100 and a box 200, where the battery unit 100 is accommodated in the box 200.

The box 200 is configured to provide an accommodation space for components such as the battery unit 100. The box 200 can provide dustproof, waterproof, and protective functions for components such as the battery unit 100 accommodated therein, thereby reducing the impact of external liquids or other foreign objects on the effectiveness and performance of components such as the battery unit 100, and effectively extending the service life of the battery 1.

The box 200 may be of various structures. In some embodiments, the box 200 may include a first portion 201 and a second portion 202. The first portion 201 and the second portion 202 fit together so that the first portion 201 and the second portion 202 jointly define a space for accommodating the battery unit 100. The second portion 202 may be a hollow structure with one end open, and the first portion 201 may be a plate structure, where the first portion 201 covers the open side of the second portion 202 so that the first portion 201 and the second portion 202 jointly define the accommodating space. Alternatively, the first portion 201 and the second portion 202 may both be hollow structures with one side open, where the open side of the first portion 201 is engaged with the open side of the second portion 202.

The box 200 may be of various shapes, for example, cylindrical or rectangular.

The box 200 may be made of various materials, for example, copper, iron, aluminum, stainless steel, aluminum alloy, or plastic.

The battery unit 100 is an energy storage unit capable of converting chemical energy into electrical energy. In the battery 1, one battery unit 100 may be provided, or at least two battery units 100 may be provided. In a case that at least two battery units 100 are provided, the at least two battery units 100 may be connected in series, parallel, or series-parallel, where being connected in series-parallel means a combination of series and parallel connections of the at least two battery units 100.

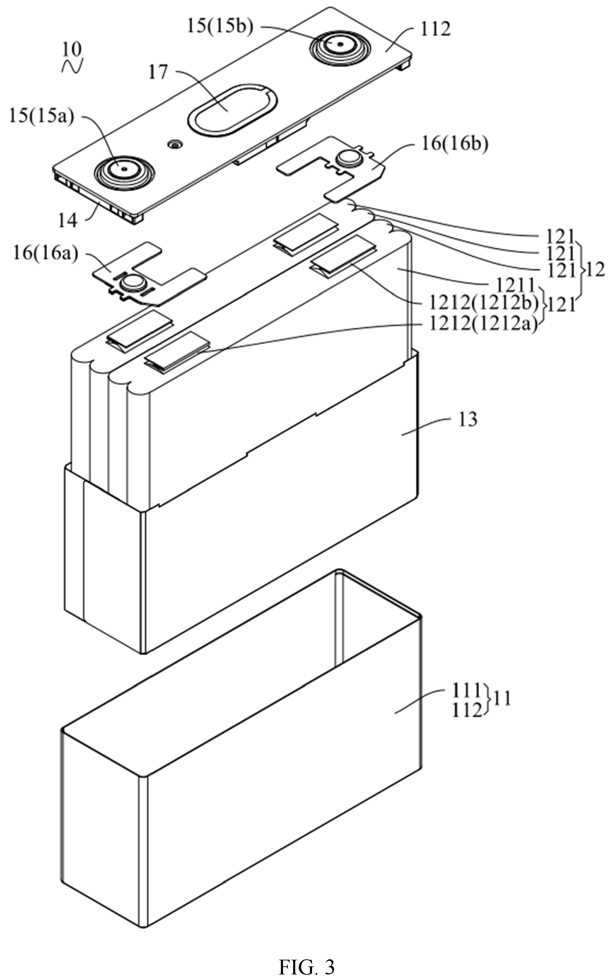

The battery unit 100 may be a battery cell 10 (as shown in FIG. 3). The at least two battery cells 10 may be directly connected in series, parallel, or series-parallel, and then an entirety of the at least two battery cells 10 is accommodated in the box 200. The battery cell 10 may be a lithium-ion secondary battery, a lithium-sulfur battery, a sodium-lithium-ion battery, a sodium-ion battery, a magnesium-ion battery, or the like. The battery cell 10 may be cylindrical, flat, cuboid, or of other shapes. The battery cell 10 may adopt different packaging methods to form a cylindrical battery cell, a prismatic battery cell, a pouch battery cell, or the like.

Alternatively, the battery unit 100 may be a battery module or a battery group. The at least two battery cells 10 may be first connected in series, parallel or series-parallel to form a modular structure, namely a battery module or a battery group; and then at least two battery modules or battery groups are then connected in series, parallel or series-parallel to form an entirety which is accommodated in the box 200.

Certainly, the battery 1 may further include other structures. For example, the battery 1 may further include a busbar component (not shown in the figure) configured to implement electrical connection between the at least two battery units 100. For another example, the battery 1 may further include a power distribution apparatus (not shown in the figure) which is used as a control unit for distributing energy of the battery 1 to perform high-voltage distribution on the battery 1.

Certainly, in some embodiments, the battery 1 may not include the box 200. Instead, the at least two battery cells 10 are electrically connected, and are made into an entirety through a necessary fixing structure, and then the entirety is placed into an electric apparatus.

Referring to FIG. 3, FIG. 3 is a schematic exploded view of a battery cell 10 according to some embodiments of this application. The battery cell 10 is the smallest unit for storing and outputting electrical energy. The battery cell 10 includes components such as a housing 11, an electrode assembly group 12, an insulating shell 13, an insulating member 14, an electrode terminal 15, an adapter 16, an explosion-proof valve 17, and an electrolyte (not shown in the figure).

The housing 11 is a component that isolates an internal environment of the battery cell 10 from the external environment. The housing 11 includes a shell 111 and an end cover 112. The end cover 112 is a component that covers an opening of the shell 111 to isolate an internal environment of the battery cell 10 from the external environment. In some embodiments, a shape of the end cover 112 may be adapted to a shape of the shell 111 to fit the shell 111. In some embodiments, the end cover 112 may be made of a material with given hardness and strength, so that the end cover 112 is less likely to deform when subjected to squeezing and collision, allowing the battery cell 10 to have high structural strength and enhanced reliability. The end cover 112 may be made of various materials. The end cover 112 may be made of a material such as copper, iron, aluminum, stainless steel, aluminum alloy, or plastic.

The shell 111 is a component configured to form the internal environment of the battery cell 10 together with the end cover 112. The internal environment formed by the shell 111 and the end cover 112 may be used to accommodate components such as the electrode assembly group 12, the insulating shell 13, the insulating member 14, and an electrolyte. In some embodiments, the shell 111 and the end cover 112 may be independent components, an opening may be provided in the shell 111, and the end cover 112 covers the opening to form the internal environment of the battery cell 10. In some embodiments, the end cover 112 and the shell 111 may alternatively be integrated. Specifically, the end cover 112 and the shell 111 may form a shared connection surface before other components are disposed inside the housing, and then the shell 111 is covered with the end cover 112 when the inside of the shell 111 needs to be enclosed. The shell 111 may be of various shapes and sizes, such as a cuboid, a cylinder, and a hexagonal prism. A shape of the shell 111 may be determined based on a specific shape and size of the electrode assembly group 12. The shell 111 may be made of various materials. The shell 111 may be made of a material such as copper, iron, aluminum, stainless steel, aluminum alloy, or plastic.

The electrode assembly group 12 is a component in which electrochemical reactions take place in the battery cell 10. The electrode assembly group 12 may include one or at least two electrode assemblies 121. In a case that a plurality of electrode assemblies 121 are provided, the plurality of electrode assemblies 121 may be arranged side by side. The electrode assembly 121 includes a positive electrode sheet (not shown in the figure), a negative electrode sheet (not shown in the figure), and a separator (not shown in the figure). The separator separates the positive electrode sheet from the negative electrode sheet. The positive electrode sheet, the separator, and the negative electrode sheet may be made into the electrode assembly 121 by winding, stacking, or other methods. In the electrode assembly 121, portions of the positive electrode sheet and the negative electrode sheet that have active materials constitute an electrode body 1211 of the electrode assembly 121, and portions of the positive electrode sheet and the negative electrode sheet that do not have active materials constitute electrode tabs 1212. The electrode tab 1212 is a current transmission terminal of the electrode assembly 121 and is configured to transmit current. The electrode tab 1212 of the positive electrode sheet is a positive electrode tab 1212a, and the electrode tab 1212 of the negative electrode sheet is a negative electrode tab 1212b. The positive electrode tab 1212a and the negative electrode tab 1212b may be located together at one end of the electrode body 1211 or respectively at two ends of the electrode body 1211.

The insulating shell 13 is a shell-like structure with an open top and having insulation performance. The insulating shell 13 wraps the outside of the electrode assembly group 12, especially wraps all parts of the electrode assembly group 12 except the top (that is, wrapping the circumferential side and the bottom of the electrode assembly group 12). The insulating shell 13 is made of an insulating material and has insulation performance. The insulating shell 13 is configured to insulate and isolate the electrode assembly group 12 from the housing 11 to reduce the risk of corrosion of the housing caused by direct contact between the electrode assembly group 12 and the housing 11. The insulating shell 13 may be made of an inorganic insulating material, such as silicon oxide, silicon nitride, aluminum oxide, or aluminum nitride. The insulating shell 13 may also be made of an organic insulating material, such as polyimide, polyethylene, polyvinylidene fluoride, or polytetrafluoroethylene.

The electrolyte is a liquid that infiltrates the electrode assembly 121. The battery cell 10 functions mainly relying on migration of active ions between the positive electrode sheet and the negative electrode sheet. When the battery cell 10 is being charged, the positive electrode sheet generates active ions, and the active ions provided by the positive electrode sheet can penetrate the holes of the separator to move to the negative electrode sheet through the electrolyte, and intercalate into the negative electrode active material of the negative electrode sheet. Conversely, when the battery cell 10 is being discharged, the active ions interacted into the negative electrode active material of the negative electrode sheet are released, and the active ions released from the negative electrode sheet can penetrate the holes of the separator to move to the positive electrode sheet through the electrolyte, and intercalate into the positive electrode active material of the positive electrode sheet. The active ions may be lithium ions, sodium ions, or the like.

The electrode terminal 15 is a component electrically connected to the electrode assembly 121 and configured to output or input electrical energy. The electrode terminal 15 includes a positive electrode terminal 15a and a negative electrode terminal 15b. The positive electrode terminal 15a is electrically connected to the positive electrode tab 1212a of the electrode assembly 121. The negative electrode terminal 15b is electrically connected to the negative electrode tab 1212b of the electrode assembly 121. The electrode terminal 15 may be installed on the housing 11, with its installation position and installation state stabilized relative to the housing 11. In some embodiments, the electrode terminal 15 may be installed on the housing 11 by flange riveting.

The adapter 16 is a current collecting member electrically connected between the electrode tab 1212 of the electrode assembly 121 and the corresponding electrode terminal 15. The adapter 16 may also be referred to as an adapter connector, a current collecting plate, an adapter sheet, or the like. The adapter 16 has conductive properties and is made of a conductive material. The material of the adapter 16 may include aluminum, aluminum alloy, copper, copper alloy, copper-aluminum alloy, and the like. The adapter 16 includes a positive electrode adapter 16a and a negative electrode adapter 16b. The positive electrode tab 1212a of the electrode assembly 121 may be electrically connected to the positive electrode terminal 15a through the positive electrode adapter 16a, and the negative electrode tab 1212b of the electrode assembly 121 may be electrically connected to the negative electrode terminal 15b through the negative electrode adapter 16b to form a current loop. In some embodiments, the adapter 16 may be connected to the electrode tab 1212 of the electrode assembly 121 by welding, abutting, or the like. The adapter 16 may be connected to the electrode terminal 15 by welding, abutting, or the like. The adapter 16 may be of various shapes, such as square, circular, or special-shaped.

The insulating member 14 is a component having insulation performance. The insulating member 14 is provided within the housing 11, especially between the electrode assembly 121 and a wall portion (for example, the end cover 112) of the housing 11 having the electrode terminal 15. On the basis that the electrode tab 1212 of the electrode assembly 121 and the corresponding electrode terminal 15 can be electrically connected, the insulating member 14 may be configured to insulate and isolate the electrode assembly 121 from the wall portion of the housing 11 having the electrode terminal 15, to reduce the risk of phenomena such as short circuit and current leakage. In addition, the insulating member 14 may be further fixed to the wall portion of the housing 11 having the electrode terminal 15 and abut against the electrode assembly 121 to fill a gap between the electrode assembly 121 and the wall portion of the housing 11, thereby tightly fixing the electrode assembly 121. This can to a certain extent ensure that the electrode assembly 121 does not move or shake relative to the battery cell 10 during use, help maintain the structural integrity of the battery cell 10, and reduce the risk of loosening or deformation of the electrode assembly 121.

In some embodiments, an explosion-proof valve 17 may be further provided on the housing 11. The explosion-proof valve 17 may be configured to release internal pressure when the internal pressure (or temperature) of the battery cell 10 reaches a threshold. Correspondingly, the insulating member 14 is provided with an opening (not shown in the figure) at a position corresponding to the explosion-proof valve 17. The opening communicates with a side of the insulating member 14 close to the electrode assembly 121 and a side of the insulating member 14 close to the explosion-proof valve 17, and is configured to, when the internal pressure (or temperature) of the battery cell 10 reaches a threshold, allow at least some gases to flow from the opening to the explosion-proof valve 17 and be discharged via the explosion-proof valve 17.

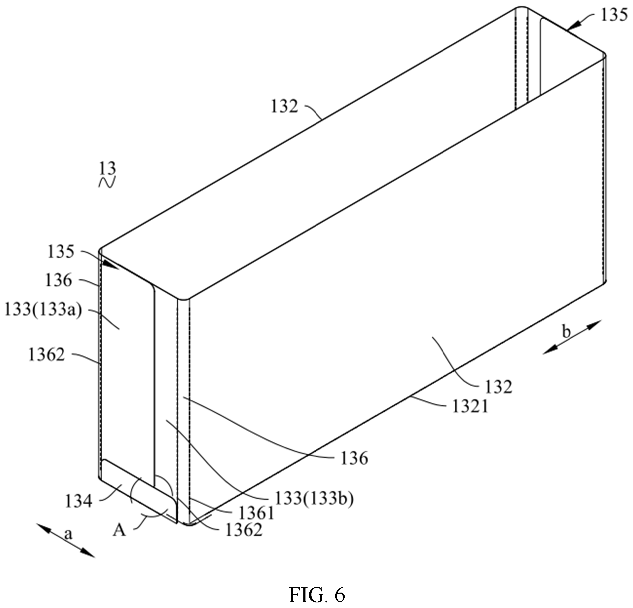

Referring to FIG. 3, FIG. 4, FIG. 5, and FIG. 6, some embodiments of this application provide a battery cell 10. The battery cell 10 includes a housing 11, an electrode assembly group 12, and an insulating shell 13. The electrode assembly group 12 is accommodated in the housing 11. The electrode assembly group 12 includes one or more electrode assemblies 121 arranged side by side. The insulating shell 13 includes a base piece 131, main folding pieces 132, and side folding pieces 133. The base piece 131 supports the electrode assembly group 12. Two main folding pieces 132 are provided and are respectively arranged on two opposite sides of the base piece 131 along a first direction a to respectively wrap two opposite sides of the electrode assembly group 12 along the first direction a. The insulating shell 13 has a first side 135 along a second direction b, the second direction b being perpendicular to the first direction a.

On the first side 135: at least one main folding piece 132 is connected to the side folding piece 133 via a transition corner 136, the side folding piece 133 wraps a corresponding side of the electrode assembly group 12, the transition corner 136 is connected to the main folding piece 132 via a first fold line 1361 and is connected to the side folding piece 133 via a second fold line 1362, the base piece 131 is connected to an extension folding piece 134 via a third fold line 1341; when the insulating shell 13 is in an unfolded state, the third fold line 1341 is offset from a straight line on which the first fold line 1361 is located, and/or is offset from a straight line on which the second fold line 1362 is located; and the extension folding piece 134 is folded to a corresponding side of the electrode assembly group 12 and covers a gap between the corresponding side folding piece 133 and the base piece 131.

It should be noted that the housing 11 is a component that isolates an internal environment of the battery cell 10 from the external environment. In addition, other related descriptions of the housing 11 can be found in the foregoing description, and details are not repeated herein.

The electrode assembly group 12 is a component in the battery cell 10 where electrochemical reactions take place. The electrode assembly group 12 may include one or at least two electrode assemblies 121. In a case that a plurality of electrode assemblies 121 are provided, the plurality of electrode assemblies 121 may be arranged side by side. The electrode assembly group 12 may be accommodated in the housing 11. In addition, other related descriptions of the electrode assembly group 12 can be found in the foregoing description, and details are not repeated herein.

It should also be noted that the insulating shell 13 may be folded to change from an unfolded state to a wrapping state. The insulating shell 13 is in a wrapping state in the battery cell 10. In a wrapping state, the insulating shell 13 can form a shell-like structure matching the outer shape of the electrode assembly group 12. The insulating shell 13 has an open top, and the insulating shell 13 may wrap the outside of the electrode assembly group 12, especially wrap the outside of all parts of the electrode assembly group 12 except the top (that is, wrapping the circumferential side and the bottom of the electrode assembly group 12).

The insulating shell 13 is made of an insulating material and has insulation performance. The insulating shell 13 is configured to insulate and isolate the electrode assembly group 12 from the housing 11 to reduce the risk of corrosion of the housing 11 caused by direct contact between the electrode assembly group 12 and the housing 11. The insulating shell 13 may be made of an inorganic insulating material, such as silicon oxide, silicon nitride, aluminum oxide, or aluminum nitride. The insulating shell 13 may also be made of an organic insulating material, such as polyimide, polyethylene, polyvinylidene fluoride, or polytetrafluoroethylene.

It should also be noted that the insulating shell 13 includes a base piece 131, main folding pieces 132, and side folding pieces 133.

One base piece 131 is provided. When the insulating shell 13 is in a wrapping state, the base piece 131 wraps the bottom of the electrode assembly group 12 and supports the electrode assembly group 12. In some embodiments, the base piece 131 may be a rectangular structure matching the bottom of the electrode assembly group 12.

Two main folding pieces 132 are provided. The two main folding pieces 132 are respectively arranged on two opposite sides of the base piece 131 along the first direction a. Each main folding piece 132 may be integrally connected to the base piece 131, and each main folding piece 132 may be connected to the base piece 131 via a fourth fold line 1321. The fourth fold line 1321 may be a marking line, a weakened trace, a dotted printed line, or the like printed on the insulating shell 13. When the insulating shell 13 is in a wrapping state, each main folding piece 132 is bent approximately 90° relative to the base piece 131 along the fourth fold line 1321 and wraps a corresponding side surface of the electrode assembly group 12 along the first direction a, meaning that the two main folding pieces 132 respectively wrap two opposite sides of the electrode assembly group 12 along the first direction a. In some embodiments, the main folding piece 132 may be a rectangular structure matching the corresponding side surface of the electrode assembly group 12.

Along a second direction b perpendicular to the first direction a, the insulating shell 13 may have a first side 135. The first side 135 may be one side of the insulating shell 13 along the second direction b, that is, only one side of the insulating shell 13 along the second direction b adopts the related design mentioned in this application, while the other side may adopt other designs to wrap a corresponding side of the electrode assembly group 12 along the second direction b. Alternatively, the two opposite sides of the insulating shell 13 along the second direction b may be the first sides 135, that is, the two opposite sides of the insulating shell 13 along the second direction b adopt the related design mentioned in this application.

It should also be noted that on the first side 135, at least one main folding piece 132 is connected to a side folding piece 133 on an edge side corresponding to the first side 135, and the connected main folding piece 132 and side folding piece 133 may be integrally connected. In some embodiments, one main folding piece 132 may be connected to the side folding piece 133 via a transition corner 136, that is, one side folding piece 133 is provided on the first side 135. In this case, in a wrapping state of the insulating shell 13, a dimension of the side folding piece 133 along the first direction a is greater than or equal to a dimension of the electrode assembly group 12 along the first direction a, so that the side folding piece 133 can be bent relative to the main folding piece 132 to a corresponding side surface of the electrode assembly group 12 (that is, a side surface corresponding to the first side 135) and wrap the corresponding side surface of the electrode assembly group 12. In some other embodiments, both of the two main folding pieces 132 may be connected to side folding pieces 133 via transition corners 136, that is, two side folding pieces 133 are provided on the first side 135. In this case, in a wrapping state of the insulating shell 13, a sum of dimensions of the two side folding pieces 133 along the first direction a is greater than or equal to the dimension of the electrode assembly group 12 along the first direction a, so that the two side folding pieces 133 can be bent relative to the main folding pieces 132 to a same side surface of the electrode assembly group 12 and together wrap the corresponding side surface of the electrode assembly group 12. The side folding piece 133 may be designed in various shapes, such as a rectangular shape.

The connected main folding piece 132 and side folding piece 133 are transitionally connected via a transition corner 136. Each transition corner 136 is connected to the main folding piece 132 via the first fold line 1361, and each transition corner 136 is connected to the side folding piece 133 via the second fold line 1362. The first fold line 1361 and the second fold line 1362 may be marking lines, weakened traces, dotted printed lines, or the like printed on the insulating shell 13. In a wrapping state of the insulating shell 13, each transition corner 136 is bent relative to the main folding piece 132 along the first fold line 1361, and the side folding piece 133 connected to the transition corner 136 is bent relative to the transition corner 136 along the second fold line, so that the side folding piece 133 is bent relative to the main folding piece 132 to the corresponding side surface of the electrode assembly group 12. The transition corner 136 may be a rounded corner, a chamfer, or the like.

It should also be noted that on the first side 135, the base piece 131 is connected to the extension folding piece 134 on an edge side corresponding to the first side 135, and the extension folding piece 134 and the base piece 131 may be integrally connected. The extension folding piece 134 and the base piece 131 are connected via the third fold line 1341. The third fold line 1341 may be a marking line, a weakened trace, a dotted printed line, or the like printed on the insulating shell 13.

In a wrapping state of the insulating shell 13, the extension folding piece 134 can be bent relative to the base piece 131 along the third fold line 1341 to the corresponding side surface of the electrode assembly group 12 and mainly wrap a corner region between the corresponding side surface and the bottom surface of the electrode assembly group 12, thereby covering the gap between the corresponding side folding piece 133 and the base piece 131. Thus, at the gap between the corresponding side folding piece 133 and the base piece 131, the electrode assembly group 12 can be insulated and isolated from the housing 11 via the extension folding piece 134, thereby improving the insulation effect of the insulating shell 13 between the electrode assembly group 12 and the housing 11.

In a case that one side folding piece 133 is provided on the first side 135, the extension folding piece 134 may be folded to an outer side of the side folding piece 133, or may be folded to an inner side of the side folding piece 133. In a case that two side folding pieces 133 are provided on the first side 135, the extension folding piece 134 may be folded to outer sides of the two side folding pieces 133, may be folded to between the two side folding pieces 133, or may be folded to inner sides of the two side folding pieces 133.

It should also be noted that the unfolded state of the insulating shell 13 is a state before the insulating shell 13 is folded to change into a wrapping state. The insulating shell 13 is laid flat in an unfolded state.

In some embodiments, in an unfolded state of the insulating shell 13, on the first side 135, the third fold line 1341 is offset from the straight line on which the first fold line 1361 is located, and is offset from the straight line on which the second fold line 1362 is located.

In some other embodiments, in an unfolded state of the insulating shell 13, on the first side 135, the third fold line 1341 is offset from the straight line on which the first fold line 1361 is located, or is offset from the straight line on which the second fold line 1362 is located.

A region from the first fold line 1361 to the second fold line 1362 is mainly used to form an outer surface of the transition corner 136 (for example, an arc surface of a rounded corner, or an inclined surface of a chamfer). Therefore, by arranging the third fold line 1341 to be offset from the straight line on which at least one of the first fold line 1361 or the second fold line 1362 is located when the insulating shell 13 is in an unfolded state, the extension folding piece 134 can be smoothly bent to the corresponding side surface of the electrode assembly group 12, reducing the risk of mutual interference between the extension folding piece 134 and the corresponding side folding piece 133. Moreover, in a case that the extension folding piece 134 is bent along the third fold line 1341 to the corresponding side surface of the electrode assembly group 12, the extension folding piece 134 can also be brought closer to the corresponding side folding piece 133, thereby reducing the risk of a large gap between the extension folding piece 134 and the corresponding side folding piece 133, optimizing the insulation effect of the side folding piece 133 and the extension folding piece 134 together on the first side 135, and optimizing the insulation effect of the insulating shell 13 between the electrode assembly group 12 and the housing 11.

In summary, in the battery cell 10 according to the embodiments of this application, the insulating shell 13 may support the electrode assembly group 12 through the base piece 131 and wrap two opposite sides of the electrode assembly group 12 along the first direction a respectively through the two main folding pieces 132 respectively arranged on two opposite sides of the base piece 131 along the first direction a. On this basis, on the first side 135, the insulating shell 13 may further wrap the corresponding side of the electrode assembly group 12 via the side folding piece 133 connected to at least one main folding piece 132, and have the extension folding piece 134, connected to the base piece 131, folded to the corresponding side surface of the electrode assembly group 12 to cover the gap between the corresponding side folding piece 133 and the base piece 131, so that at the gap between the corresponding side folding piece 133 and the base piece 131, the extension folding piece 134 can effectively insulate and isolate the electrode assembly group 12 from the housing 11. Based on this, the insulating shell 13 that provides relatively full and reliable wrapping can reliably wrap the outside of the electrode assembly group 12 and reliably insulate and isolate the electrode assembly group 12 from the housing 11, thereby improving the insulation effect of the insulating shell 13 between the electrode assembly group 12 and the housing 11, reducing the risk of the electrode assembly group 12 coming into contact with the housing 11 through the seam gap of the insulating shell 13, and reducing the risk of corrosion of the housing 11 caused by direct contact between the electrode assembly group 12 and the housing 11.

Moreover, in this embodiment, on the first side 135, by arranging the third fold line 1341 to be offset from the straight line on which at least one of the first fold line 1361 or the second fold line 1362 is located when the insulating shell 13 is in an unfolded state, the extension folding piece 134 can be smoothly bent to the corresponding side surface of the electrode assembly group 12, reducing the risk of mutual interference between the extension folding piece 134 and the corresponding side folding piece 133. Moreover, in a case that the extension folding piece 134 is bent along the third fold line 1341 to the corresponding side surface of the electrode assembly group 12, the extension folding piece 134 can also be brought closer to the corresponding side folding piece 133, thereby reducing the risk of a large gap between the extension folding piece 134 and the corresponding side folding piece 133, optimizing the insulation effect of the side folding piece 133 and the extension folding piece 134 together on the first side 135, and optimizing the insulation effect of the insulating shell 13 between the electrode assembly group 12 and the housing 11.

Referring to FIG. 3, FIG. 4, and FIG. 5, in some embodiments of this application, when the insulating shell 13 is in an unfolded state, the third fold line 1341 is located between the straight line on which the first fold line 1361 is located and the straight line on which the second fold line 1362 is located.

It should be noted that in an unfolded state of the insulating shell 13, on the first side 135, since a region from the first fold line 1361 to the second fold line 1362 is mainly used to form an outer surface of the transition corner 136 (for example, an arc surface of a rounded corner, or an inclined surface of a chamfer), the third fold line 1341 is located between the straight line on which the first fold line 1361 is located and the straight line on which the second fold line 1362 is located.

With the above solution, when the insulating shell 13 is in an unfolded state, the third fold line 1341 is located between the straight line on which the first fold line 1361 is located and the straight line on which the second fold line 1362 is located, so that the extension folding piece 134 can be smoothly and successfully bent to the corresponding side surface of the electrode assembly group 12, reducing the risk of interference between the extension folding piece 134 and the corresponding side folding piece 133. Moreover, in a case that the extension folding piece 134 is bent along the third fold line 1341 to the corresponding side surface of the electrode assembly group 12, the extension folding piece 134, especially a corner region between the extension folding piece 134 and the base piece 131, can also be brought closer to the corresponding side folding piece 133, thereby reducing the risk of a gap or seam between the extension folding piece 134 (especially the corner region between the extension folding piece 134 and the base piece 131) and the corresponding side folding piece 133, optimizing the insulation effect of the side folding piece 133 and the extension folding piece 134 together on the first side 135, and optimizing the insulation effect of the insulating shell 13 between the electrode assembly group 12 and the housing 11. This embodiment is particularly applicable to a case "the extension folding piece 134 is folded to an outer side of the corresponding side folding piece 133".

Referring to FIG. 3, FIG. 5, and FIG. 6, in some embodiments of this application, the extension folding piece 134 is folded to an outer side of the corresponding side folding piece 133.

It should be noted that in a case that one side folding piece 133 is provided on the first side 135, the extension folding piece 134 may be folded to an outer side of the side folding piece 133. In a case that two side folding pieces 133 are provided on the first side 135, the extension folding piece 134 may be folded to outer sides of the two side folding pieces 133.

With the above solution, in a case that the side folding pieces 133, the main folding pieces 132, and the base piece 131 cooperate to wrap the electrode assembly group 12, the extension folding piece 134 can be folded to the outer side of the corresponding side folding piece 133 to reliably cover the gap between the corresponding side folding piece 133 and the base piece 131 via the extension folding piece 134. On this basis, bending of the extension folding piece 134 is facilitated, especially connection and fixation of the side folding piece 133 to the extension folding piece 134 are facilitated. This can visually optimize the effect of the extension folding piece 134 covering the gap between the side folding piece 133 and the base piece 131, and reduce the risk of the extension folding piece 134 not fully covering the gap. As a result, the folding convenience of the insulating shell 13 can be improved, the structural reliability and structural stability of the insulating shell 13 in a wrapping state can be improved, the risk of the insulating shell 13 falling apart can be reduced, and the insulation effect of the insulating shell 13 between the electrode assembly group 12 and the housing 11 can be optimized. In addition, by folding the extension folding piece 134 to the outer side of the corresponding side folding piece 133, the side folding piece 133 can closely fit and wrap the corresponding side surface of the electrode assembly group 12, allowing the side folding piece 133 to better insulate and wrap the corresponding side surface of the electrode assembly group 12.

Certainly, in other embodiments, in a case that one side folding piece 133 is provided on the first side 135, the extension folding piece 134 may be folded to an inner side of the side folding piece 133. In a case that two side folding pieces 133 are provided on the first side 135, the extension folding piece 134 may be folded to between the two side folding pieces 133, or may be folded to inner sides of the two side folding pieces 133.

Referring to FIG. 3, FIG. 4, FIG. 5, and FIG. 6, in some embodiments of this application, on the first side 135, both of the two main folding pieces 132 are connected to side folding pieces 133 via transition corners 136, and the two side folding pieces 133 together wrap the corresponding side of the electrode assembly group 12.

It should be noted that on the first side 135, both of the two main folding pieces 132 are connected to side folding pieces 133 via transition corners 136, that is, two side folding pieces 133 are provided on the first side 135. In a wrapping state of the insulating shell 13, a sum of dimensions of the two side folding pieces 133 along the first direction a is greater than or equal to a dimension of the electrode assembly group 12 along the first direction a. Such arrangement enables the two side folding pieces 133 to be bent relative to the main folding pieces 132 to a same side surface of the electrode assembly group 12 and together wrap the corresponding side surface of the electrode assembly group 12.

With the above solution, in a wrapping state of the insulating shell 13, on the first side 135, the two side folding pieces 133 respectively connected to the two main folding pieces 132 can be bent to a same side surface of the electrode assembly group 12 and together wrap the corresponding side surface of the electrode assembly group 12. On this basis, the operational convenience of bending the two side folding pieces 133 toward each other and wrapping the same side surface of the electrode assembly group 12 can be improved, thereby improving the convenience of folding the insulating shell 13 and improving the convenience of assembling the insulating shell 13 and the electrode assembly group 12. Moreover, the connection seam between the two side folding pieces 133 can be positioned at the middle of the corresponding side surface of the electrode assembly group 12. This can improve the connection strength between the two side folding pieces 133, balance the stress on the two side folding pieces 133 when the electrode assembly group 12 swells, reduce the risk of the two side folding pieces 133 falling apart or being pushed apart, and enable the two side folding pieces 133 to securely and stably insulate and wrap the corresponding side surface of the electrode assembly group 12. As a result, the insulation wrapping effect of the two side folding pieces 133 together on the corresponding side surface of the electrode assembly group 12 can be improved, and the insulation effect of the insulating shell 13 between the electrode assembly group 12 and the housing 11 can be optimized.

Certainly, in other embodiments, one main folding piece 132 corresponding to an edge side of the first side 135 may be connected to the side folding piece 133 via the transition corner 136, that is, one side folding piece 133 is provided on the first side 135. In a wrapping state of the insulating shell 13, a dimension of the side folding piece 133 along the first direction a is greater than or equal to a dimension of the electrode assembly group 12 along the first direction a, so that the side folding piece 133 can be bent relative to the main folding piece 132 to a corresponding side surface of the electrode assembly group 12 and wrap the corresponding side surface of the electrode assembly group 12.

Referring to FIG. 3, FIG. 5, and FIG. 6, in some embodiments of this application, the extension folding piece 134 is folded to outer sides of the two side folding pieces 133.

It should be noted that in a case that two side folding pieces 133 are provided on the first side 135, the extension folding piece 134 may be folded to outer sides of the two side folding pieces 133.

With the above solution, on the first side 135, in a case that the two side folding pieces 133 together wrap the corresponding side surface of the electrode assembly group 12, the extension folding piece 134 can be folded to the outer sides of the two side folding pieces 133 to reliably cover a gap between the two side folding pieces 133 and the base piece 131 via the extension folding piece 134. On this basis, bending of the extension folding piece 134 is facilitated, especially connection and fixation of the extension folding piece 134 to the two side folding pieces 133 are facilitated. This can visually optimize the effect of the extension folding piece 134 covering the gap between the two side folding pieces 133 and the base piece 131, and reduce the risk of the extension folding piece 134 not fully covering the gap. As a result, the folding convenience of the insulating shell 13 can be improved, the structural reliability and structural stability of the insulating shell 13 in a wrapping state can be improved, the risk of the insulating shell 13 falling apart can be reduced, and the insulation effect of the insulating shell 13 between the electrode assembly group 12 and the housing 11 can be optimized. In addition, by folding the extension folding piece 134 to the outer sides of the two side folding pieces 133, the two side folding pieces 133 can reliably, fully, and closely wrap the corresponding side surface of the electrode assembly group 12, allowing the two side folding pieces 133 to better insulate and wrap the corresponding side surface of the electrode assembly group 12.

Certainly, in other embodiments, the extension folding piece 134 may be folded to between the two side folding pieces 133, or may be folded to inner sides of the two side folding pieces 133.

Referring to FIG. 3, FIG. 5, and FIG. 6, in some embodiments of this application, on the first side 135, the two side folding pieces 133 are a first side folding piece 133a and a second side folding piece 133b, and part of the first side folding piece 133a is folded to an outer side of the second side folding piece 133b.

It should be noted that in a case that two side folding pieces 133 are provided on the first side 135, the second side folding piece 133b may be first bent to a corresponding side surface of the electrode assembly group 12, and then the first side folding piece 133a may be bent to the same side surface of the electrode assembly group 12, with part of the first side folding piece 133a covering the outer side of the second side folding piece 133b. That is, in a wrapping state of the insulating shell 13, on the first side 135, along the second direction b, projections of the first side folding piece 133a and the second side folding piece 133b partially overlap.

With the above solution, in a wrapping state of the insulating shell 13, on the first side 135, the first side folding piece 133a and the second side folding piece 133b whose projections partially overlap along the second direction b together wrap the corresponding side surface of the electrode assembly group 12. On this basis, the first side folding piece 133a can create a pressing effect on the second side folding piece 133b via the part stacked to the outer side of the second side folding piece 133b, thereby enhancing the connection strength between the first side folding piece 133a and the second side folding piece 133b. This helps maintain the shapes of the first side folding piece 133a and the second side folding piece 133b when the electrode assembly group 12 swells, reduces the risk of the first side folding piece 133a and the second side folding piece 133b falling apart or being pushed apart, and allows the first side folding piece 133a and the second side folding piece 133b to reliably, durably, and fully insulate and wrap the corresponding side surface of the electrode assembly group 12. As a result, the insulation wrapping effect of the first side folding piece 133a and the second side folding piece 133b on the corresponding side surface of the electrode assembly group 12 can be optimized, and the insulation effect of the insulating shell 13 between the electrode assembly group 12 and the housing 11 can be optimized. Moreover, in a wrapping state of the insulating shell 13, even if there are machining errors in the dimensions of the electrode assembly group 12, the first side folding piece 133a, and the second side folding piece 133b along the first direction a, the overlapping part between the first side folding piece 133a and the second side folding piece 133b allows the first side folding piece 133a and the second side folding piece 133b to accommodate dimensional deviations within a certain range and to still fully insulate and wrap the corresponding side surface of the electrode assembly group 12, thereby improving the dimensional compatibility, applicability, and reliability of the insulating shell 13.

Certainly, in other embodiments, in a wrapping state of the insulating shell 13, a sum of the dimensions of the first side folding piece 133a and the second side folding piece 133b along the first direction a is equal to the dimension of the electrode assembly group 12 along the first direction a, so that the first side folding piece 133a and the second side folding piece 133b are exactly adjacent and together wrap the corresponding side surface of the electrode assembly group 12.

Referring to FIG. 3, FIG. 4, and FIG. 5, in some embodiments of this application, the part of the first side folding piece 133a folded to the outer side of the second side folding piece 133b is provided with a first notch 1331.

It should be noted that the first side folding piece 133a is provided with the first notch 1331. The first notch 1331 is provided at the part of the first side folding piece 133a folded to the outer side of the second side folding piece 133b, allowing a corresponding region of the second side folding piece 133b to be exposed via the first notch 1331. The first notch 1331 may be designed in various shapes, including but not limited to triangular, rectangular, and the like.

With the above solution, in a wrapping state of the insulating shell 13, on the first side 135, the part of the first side folding piece 133a folded to the outer side of the second side folding piece 133b allows a corresponding region of the second side folding piece 133b to be exposed via the first notch 1331, so that an adhesive structure (for example, an adhesive tape) can run through the first notch 1331 to reliably and securely bond and fix the first side folding piece 133a and the second side folding piece 133b. On this basis, the connection convenience, connection reliability, and connection strength between the first side folding piece 133a and the second side folding piece 133b can be improved, the risk of the first side folding piece 133a and the second side folding piece 133b falling apart can be reduced, and the first side folding piece 133a and the second side folding piece 133b are allowed to reliably and durably insulate and wrap the corresponding side surface of the electrode assembly group 12. As a result, the insulation wrapping effect of the first side folding piece 133a and the second side folding piece 133b on the corresponding side surface of the electrode assembly group 12 can be optimized, and the insulation effect of the insulating shell 13 between the electrode assembly group 12 and the housing 11 can be optimized.

Certainly, in other embodiments, the first side folding piece 133a and the second side folding piece 133b may be fixed at other positions such as an edge position of the first side folding piece 133a or an overlapping position between the first side folding piece 133a and the second side folding piece 133b.

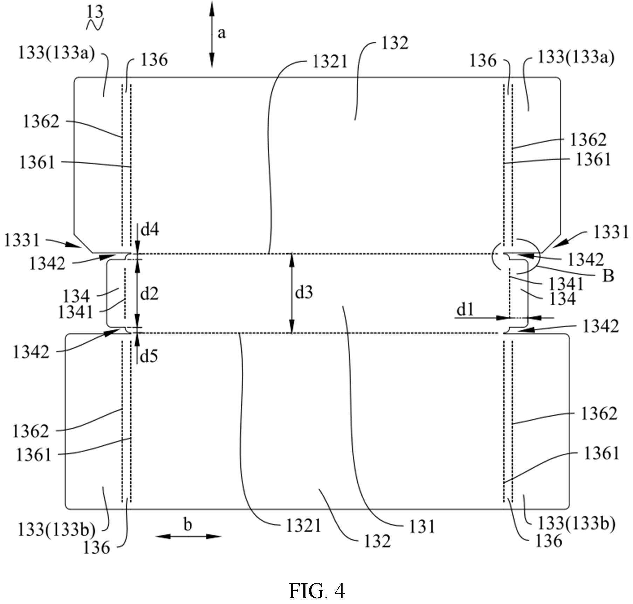

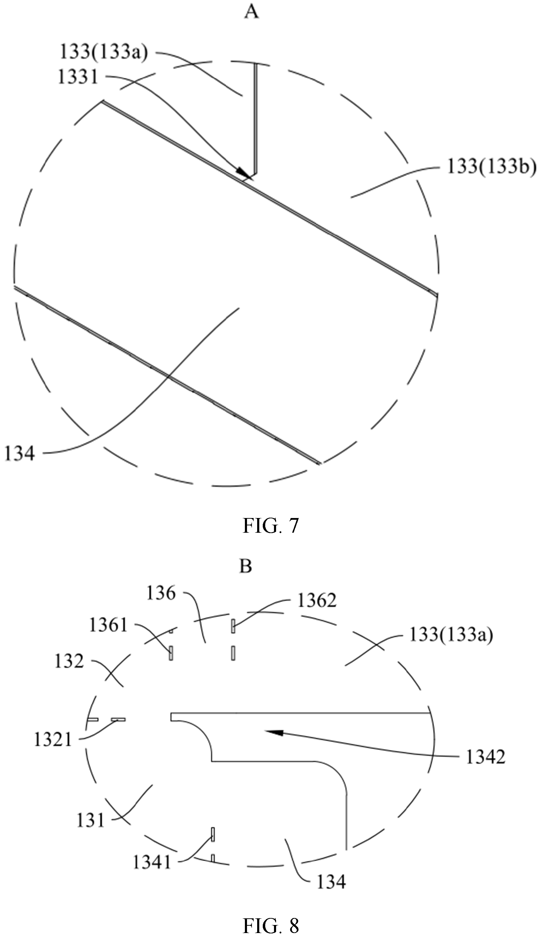

Referring to FIG. 4, FIG. 5, FIG. 6, and FIG. 7, in some embodiments of this application, the extension folding piece 134 is folded to the outer sides of the first side folding piece 133a and the second side folding piece 133b, or the extension folding piece 134 is folded to between the first side folding piece 133a and the second side folding piece 133b. The first notch 1331 is provided at an end of the first side folding piece 133a close to the extension folding piece 134, and part of the first notch 1331 is exposed outside the extension folding piece 134.

It should be noted that in a case that the extension folding piece 134 is folded to the outer side of the first side folding piece 133a or the extension folding piece 134 is folded to between the first side folding piece 133a and the second side folding piece 133b, the first notch 1331 may be provided at an end of the first side folding piece 133a close to the extension folding piece 134, and partially extend beyond and be exposed outside the extension folding piece 134, so that near the first notch 1331, the first side folding piece 133a, the second side folding piece 133b, and the extension folding piece 134 each have an exposed part.

With the above solution, in a case that the extension folding piece 134 is folded to the outer side of the first side folding piece 133a or the extension folding piece 134 is folded to between the first side folding piece 133a and the second side folding piece 133b, the first notch 1331 may be provided at an end of the first side folding piece 133a close to the extension folding piece 134, and part of the first notch 1331 may be exposed outside the extension folding piece 134, allowing a corresponding region of the second side folding piece 133b to be exposed via the part of the first notch 1331 exposed outside the extension folding piece 134. On this basis, near the first notch 1331, the first side folding piece 133a, the second side folding piece 133b, and the extension folding piece 134 each have an exposed part, allowing an adhesive structure (for example, an adhesive tape) to run through the first notch 1331 to reliably and securely bond and fix the first side folding piece 133a, the second side folding piece 133b, and the extension folding piece 134. This improves the connection convenience, connection reliability, and connection strength of the first side folding piece 133a, the second side folding piece 133b, and the extension folding piece 134, reduces the risk of the first side folding piece 133a, the second side folding piece 133b, and the extension folding piece 134 falling apart, and allows the first side folding piece 133a, the second side folding piece 133b, and the extension folding piece 134 to reliably and durably insulate and wrap the corresponding side surface of the electrode assembly group 12 (as shown in FIG. 3). As a result, the insulation wrapping effect of the first side folding piece 133a, the second side folding piece 133b, and the extension folding piece 134 can be optimized, and the insulation effect of the insulating shell 13 can be optimized.

Certainly, in other embodiments, in a case that the first notch 1331 is provided at the part of the first side folding piece 133a folded to the outer side of the second side folding piece 133b, the first notch 1331 may be provided in another region, for example, a middle region of the first side folding piece 133a along a direction perpendicular to the first direction a and the second direction b.

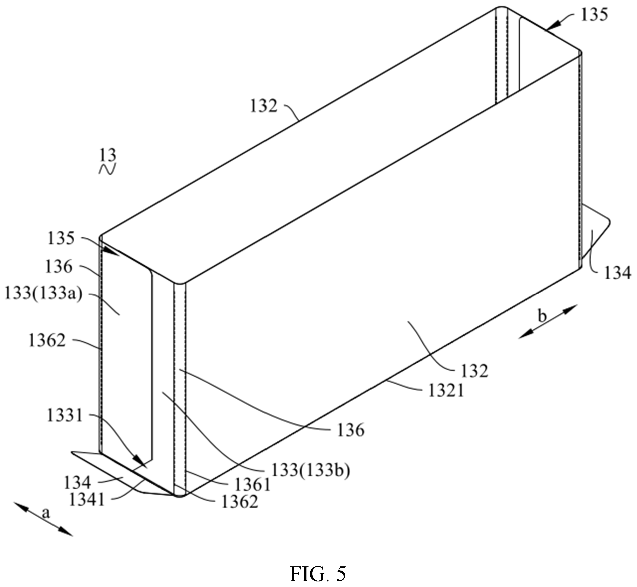

Referring to FIG. 5, FIG. 6, and FIG. 7, in some embodiments of this application, the first notch 1331 is provided at a corner of the first side folding piece 133a close to the extension folding piece 134.

It should be noted that, since the first notch 1331 is provided at the part of the first side folding piece 133a folded to the outer side of the second side folding piece 133b, the first notch 1331 is provided at a corner of the first side folding piece 133a close to the second side folding piece 133b and the extension folding piece 134. The first notch 1331 may be, but is not limited to, triangular.

With the above solution, by forming the first notch 1331 at the corner of the first side folding piece 133a close to the extension folding piece 134, the first notch 1331 can be conveniently formed by cutting or machining, facilitating processing of the first notch 1331 and accurate control over the dimension of the first notch 1331. Moreover, since the first notch 1331 is provided at the corner, the impact of the processing of the first notch 1331 on the structural strength of the first side folding piece 133a can be reduced, the risk of cracking or cracks occurring in the first side folding piece 133a near the first notch 1331 can be reduced, and the insulation wrapping effect and service life of the first side folding piece 133a can be maintained.

Certainly, in other embodiments, in a case that the first notch 1331 is provided at the part of the first side folding piece 133a folded to the outer side of the second side folding piece 133b, the first notch 1331 may be provided in a non-corner region of the first side folding piece 133a.

Referring to FIG. 4, in some embodiments of this application, along a direction perpendicular to the third fold line 1341, a dimension d1 of the extension folding piece 134 is in a range of 5 mm to 15 mm.

It should be noted that in a wrapping state of the insulating shell 13, the dimension d1 of the extension folding piece 134 along the direction perpendicular to the third fold line 1341 may correspond to a dimension of the extension folding piece 134 along a direction perpendicular to the first direction a and the second direction b; and in the unfolded state of the insulating shell 13, it may correspond to a dimension of the extension folding piece 134 along the second direction b. Along the direction perpendicular to the third fold line 1341, the dimension d1 of the extension folding piece 134 is in a range of 5 mm to 15 mm, for example, it may be 5 mm, 6 mm, 7 mm, 8 mm, 9 mm, 10 mm, 11 mm, 12 mm, 13 mm, 14 mm, 15 mm, or the like.

With the above solution, by setting the dimension d1 of the extension folding piece 134 along the direction perpendicular to the third fold line 1341 to be in a range of 5 mm to 15 mm, in a case that the extension folding piece 134 is folded to the corresponding side surface of the electrode assembly group 12, the gap between the corresponding side folding piece 133 and the base piece 131 can be reliably covered. Moreover, the dimension of the extension folding piece 134 can be correspondingly constrained to reduce the usage amount of adhesive structures (for example, adhesive tapes) used for fixing the extension folding piece 134, and reduce the risk of edge warping of the extension folding piece 134 after fixation.

Certainly, in other embodiments, since the extension folding piece 134 can cover the gap between the corresponding side folding piece 133 and the base piece 131 when folded to the corresponding side surface of the electrode assembly group 12, the dimension d1 of the extension folding piece 134 along the direction perpendicular to the third fold line 1341 may be set to be greater than 0 and less than 5 mm, or may be set to be greater than 15 mm and less than the dimension of the electrode assembly group 12 along the direction perpendicular to the first direction a and the second direction b.

Referring to FIG. 3, FIG. 4, FIG. 5, and FIG. 8, in some embodiments of this application, a second notch 1342 is provided between the extension folding piece 134 and the adjacent side folding piece 133.

It should be noted that in a case that one side folding piece 133 is provided on the first side 135, a second notch 1342 is provided between the extension folding piece 134 and its adjacent side folding piece 133. In a case that two side folding pieces 133 are provided on the first side 135, one second notch 1342 is provided between the extension folding piece 134 and each of the two side folding pieces 133 adjacent to the extension folding piece 134. That is, one second notch 1342 is provided on each of the two opposite sides of the extension folding piece 134 along the first direction a, meaning that the extension folding piece 134 corresponds to two second notches 1342. The second notch 1342 may be designed in various shapes, including but not limited to triangular, rectangular, and the like.

With the above solution, by providing the second notch 1342 between the extension folding piece 134 and its adjacent side folding piece 133, when the extension folding piece 134 is being folded to the corresponding side surface of the electrode assembly group 12, the pulling effect of the extension folding piece 134 on the adjacent side folding piece 133 can be reduced, thereby optimizing the folding convenience and folding quality of the insulating shell 13 and improving the folding flatness and precision of the extension folding piece 134 and the side folding piece 133. In addition, the provision of the second notch 1342 also helps to reduce stress concentration in a region where the side folding piece 133 is adjacent to the extension folding piece 134, thereby reducing the risk of deformation or rupture in the region where the side folding piece 133 is adjacent to the extension folding piece 134, and optimizing the structural strength and service life of the side folding piece 133.

Certainly, in other embodiments, the extension folding piece 134 and its adjacent side folding piece 133 may be separated from each other via a cutting seam, thereby omitting the provision of the second notch 1342.

Referring to FIG. 3, FIG. 4, and FIG. 6, in some embodiments of this application, at least one corner of the base piece 131 is a rounded corner.

It should be noted that since in a wrapping state of the insulating shell 13, the base piece 131 wraps the bottom of the electrode assembly group 12 and supports the electrode assembly group 12, the shape and dimension of the base piece 131 substantially correspond to the shape and dimension of the bottom of the electrode assembly group 12. The base piece 131 may be, but is not limited to, a polygon such as a rectangle. The base piece 131 has corners, and at least one corner of the base piece 131 may be arranged as a rounded corner. In some embodiments, all corners of the base piece 131 may be rounded corners.

With the above solution, by arranging at least one corner of the base piece 131 as a rounded corner, during assembly of the electrode assembly group 12 and the insulating shell 13, the risk of interference between the base piece 131 of the insulating shell 13 and the bottom surface of the electrode assembly group 12 can be reduced; and during assembly of the insulating shell 13 and the housing 11, the risk of interference between the corner of the base piece 131 of the insulating shell 13 and the housing 11 can be reduced. As a result, the assembly convenience of the insulating shell 13 with the electrode assembly group 12 and the housing 11 can be improved, the risk of damage to the corner of the insulating shell 13 caused by friction, impact, or shock during assembly can be reduced, the risk of damage to the insulating shell 13 during assembly can be reduced, and the service performance and service life of the insulating shell 13 can be improved.

Certainly, in other embodiments, the corners of the base piece 131 may be non-rounded corners. For example, all corners of the base piece 131 may be right angles.

Referring to FIG. 3, FIG. 4, and FIG. 6, in some embodiments of this application, a corner of the base piece 131 adjacent to the extension folding piece 134 is a rounded corner. Along the first direction a, a width d2 of the extension folding piece 134 is equal to a width d3 of the base piece 131 minus dimensions (that is, d4 and d5) of two corners of the base piece 131 adjacent to the extension folding piece 134.

It should be noted that on the first side 135, the two corners of the base piece 131 adjacent to the extension folding piece 134 are both rounded corners. Of the two corners, a dimension along the first direction a of one corner is d4, and d4 may be equal to, but is not limited to, a radius of the corner; and a dimension along the first direction a of the other corner is d5, and d5 may be equal to, but is not limited to, a radius of the corner.

On the first side 135, along the first direction a, the width d2 of the extension folding piece 134 is equal to: the width d3 of the base piece 131 minus a dimension d4 of one corner of the base piece 131 adjacent to the extension folding piece 134 and then minus a dimension d5 of the other corner of the base piece 131 adjacent to the extension folding piece 134. That is, d2 = d3 - d4 - d5.

With the above solution, by setting the width d2 of the extension folding piece 134 along the first direction a to be equal to the width d3 of the base piece 131 minus the dimension d4 of one corner of the base piece 131 adjacent to the extension folding piece 134 and then minus the dimension d5 of the other corner of the base piece 131 adjacent to the extension folding piece 134, the extension folding piece 134 can fully cover the gap between the corresponding edge of the base piece 131 and the corresponding side folding piece 133. On this basis, the effect of the extension folding piece 134 covering the gap between the side folding piece 133 and the base piece 131 can be optimized, and the risk of the extension folding piece 134 not fully covering the gap can be reduced. This can optimize the insulation effect of the side folding piece 133 and the extension folding piece 134 together on the first side 135, and optimize the insulation effect of the insulating shell 13 between the electrode assembly group 12 and the housing 11.

Certainly, in other embodiments, along the first direction a, the width d2 of the extension folding piece 134 may be less than or equal to the width d3 of the base piece 131.

Referring to FIG. 3, FIG. 4, and FIG. 8, in some embodiments of this application, the extension folding piece 134, a corner of the base piece 131 adjacent to the extension folding piece 134, and the side folding piece 133 adjacent to the extension folding piece 134 together enclose the second notch 1342.

It should be noted that on the basis of the previous embodiment, the second notch 1342 can be directly formed by a gap space between the extension folding piece 134, the corner of the base piece 131 adjacent to the extension folding piece 134, and the side folding piece 133 adjacent to the extension folding piece 134, without requiring additional material removal to form the second notch 1342. In an unfolded state of the insulating shell 13, the second notch 1342 is approximately trapezoidal in shape, with an oblique side of the trapezoid being an arc formed by a rounded corner.

With the above solution, on the basis of the previous embodiment, the extension folding piece 134, the corner of the base piece 131 adjacent to the extension folding piece 134, and the side folding piece 133 adjacent to the extension folding piece 134 together enclose the second notch 1342. On this basis, when the extension folding piece 134 is being folded to the corresponding side surface of the electrode assembly group 12, the pulling effect of the extension folding piece 134 on the adjacent side folding piece 133 can be reduced, thereby optimizing the folding convenience and folding quality of the insulating shell 13 and improving the folding flatness and precision of the extension folding piece 134 and the side folding piece 133. Moreover, the second notch 1342 can be formed by utilizing the dimension of the extension folding piece 134, the corner of the base piece 131, and the side folding piece 133, without requiring additional material removal, thereby improving the formation convenience of the second notch 1342 and optimizing the overall structure of the insulating shell 13. In addition, the provision of the second notch 1342 also helps to reduce stress concentration in regions where the side folding piece 133 is adjacent to the corner of the base piece 131 and the extension folding piece 134, thereby reducing the risk of deformation or rupture in the regions where the side folding piece 133 is adjacent to the corner of the base piece 131 and the extension folding piece 134, and optimizing the structural strength and service life of the insulating shell 13.

Certainly, in other embodiments, the second notch 1342 may be formed in other ways, for example, by material removal.

Referring to FIG. 4, in some embodiments of this application, at least one end of the first fold line 1361 in an extension direction of the first fold line 1361 is spaced apart from a corresponding edge side of the main folding piece 132.

It should be noted that in some embodiments, one end of the first fold line 1361 in its extension direction is spaced apart from a corresponding edge side of the main folding piece 132, that is, one end of the first fold line 1361 in its extension direction does not continuously extend to the corresponding edge side of the main folding piece 132.

As shown in FIG. 4, in some other embodiments, two opposite ends of the first fold line 1361 in its extension direction are spaced apart from respective edge sides of the main folding piece 132, that is, neither of the two opposite ends of the first fold line 1361 in its extension direction continuously extend to the corresponding edge sides of the main folding piece 132.

The corresponding edge side of the main folding piece 132 refers to an edge side of the main folding piece 132 corresponding to an end portion of the first fold line 1361 along the extension direction of the first fold line 1361.

The extension direction of the first fold line 1361 intersects (for example, is perpendicular to) the second direction b. In an unfolded state of the insulating shell 13, the extension direction of the first fold line 1361 may be (but is not limited to) parallel to the first direction a.

With the above solution, by arranging at least one end of the first fold line 1361 in its extension direction to be spaced apart from the corresponding edge side of the main folding piece 132, the first fold line 1361 does not extend through the main folding piece 132 in its extension direction. On this basis, a strong connection strength can be provided between the main folding piece 132 and the transition corner 136 in a region where the first fold line 1361 does not extend, the connection strength, connection reliability, and durability between the main folding piece 132 and the transition corner 136 can be maintained and improved, and the risk of cracks, cracking, or tearing occurring in the connection region between the main folding piece 132 and the transition corner 136 can be reduced, thereby improving the structural reliability and service life of the insulating shell 13.

Referring to FIG. 4, in some embodiments of this application, at least one end of the second fold line 1362 in an extension direction of the second fold line 1362 is spaced apart from a corresponding edge side of the side folding piece 133.

It should be noted that in some embodiments, one end of the second fold line 1362 in its extension direction is spaced apart from a corresponding edge side of the side folding piece 133, that is, one end of the second fold line 1362 in its extension direction does not continuously extend to the corresponding edge side of the side folding piece 133.

As shown in FIG. 4, in some other embodiments, two opposite ends of the second fold line 1362 in its extension direction are spaced apart from respective edge sides of the side folding piece 133, that is, neither of the two opposite ends of the second fold line 1362 in its extension direction continuously extend to the corresponding edge sides of the side folding piece 133.

The corresponding edge side of the side folding piece 133 refers to an edge side of the side folding piece 133 corresponding to an end portion of the second fold line 1362 along the extension direction of the second fold line 1362.

The extension direction of the second fold line 1362 intersects (for example, is perpendicular to) the second direction b. In an unfolded state of the insulating shell 13, the extension direction of the second fold line 1362 may be (but is not limited to) parallel to the first direction a.

With the above solution, by arranging at least one end of the second fold line 1362 in its extension direction to be spaced apart from the corresponding edge side of the side folding piece 133, the second fold line 1362 does not extend through the side folding piece 133 in its extension direction. On this basis, a strong connection strength can be provided between the side folding piece 133 and the transition corner 136 in a region where the second fold line 1362 does not extend, the connection strength, connection reliability, and durability between the side folding piece 133 and the transition corner 136 can be maintained and improved, and the risk of cracks, cracking, or tearing occurring in the connection region between the side folding piece 133 and the transition corner 136 can be reduced, thereby improving the structural reliability and service life of the insulating shell 13.

Referring to FIG. 4, in some embodiments of this application, at least one end of the third fold line 1341 in an extension direction of the third fold line 1341 is spaced apart from a corresponding edge side of the extension folding piece 134.

It should be noted that in some embodiments, one end of the third fold line 1341 in its extension direction is spaced apart from a corresponding edge side of the extension folding piece 134, that is, one end of the third fold line 1341 in its extension direction does not continuously extend to the corresponding edge side of the extension folding piece 134.

As shown in FIG. 4, in some other embodiments, two opposite ends of the third fold line 1341 in its extension direction are spaced apart from respective edge sides of the extension folding piece 134, that is, neither of the two opposite ends of the third fold line 1341 in its extension direction continuously extend to the corresponding edge sides of the extension folding piece 134.

The corresponding edge side of the extension folding piece 134 refers to an edge side of the extension folding piece 134 corresponding to an end portion of the third fold line 1341 along the extension direction of the third fold line 1341.

The extension direction of the third fold line 1341 intersects (for example, is perpendicular to) the second direction b. In an unfolded state of the insulating shell 13, the extension direction of the third fold line 1341 may be (but is not limited to) parallel to the first direction a.

With the above solution, by arranging at least one end of the third fold line 1341 in its extension direction to be spaced apart from the corresponding edge side of the extension folding piece 134, the third fold line 1341 does not extend through the extension folding piece 134 in its extension direction. On this basis, a strong connection strength can be provided between the extension folding piece 134 and the base piece 131 in a region where the third fold line 1341 does not extend, the connection strength, connection reliability, and durability between the extension folding piece 134 and the base piece 131 can be maintained and improved, and the risk of cracks, cracking, or tearing occurring in the connection region between the extension folding piece 134 and the base piece 131 can be reduced, thereby improving the structural reliability and service life of the insulating shell 13.

Referring to FIG. 4, FIG. 5, and FIG. 6, in some embodiments of this application, the extension folding piece 134 is a rectangular structure.

With the above solution, by arranging the extension folding piece 134 as a rectangular structure, the shape of the extension folding piece 134 can be regularized, allowing the extension folding piece 134 to have a regular and relatively large surface area to cover a relatively wide region and reliably cover the gap between the corresponding side folding piece 133 and the base piece 131. As a result, the effect of the extension folding piece 134 covering the gap between the side folding piece 133 and the base piece 131 can be optimized, and the risk of the extension folding piece 134 not fully covering the gap can be reduced. Moreover, the extension folding piece 134 with a rectangular structure facilitates processing, folding, and installation.

Certainly, in other embodiments, the extension folding piece 134 may be of other shapes, for example, a trapezoidal shape.

Referring to FIG. 3, FIG. 4, and FIG. 6, in some embodiments of this application, the transition corner 136 is a rounded corner.

With the above solution, by arranging the transition corner 136 as a rounded corner, a rounded transition connection can be achieved between the connected main folding piece 132 and side folding piece 133. On this basis, stress concentration between the connected main folding piece 132 and side folding piece 133 can be reduced, and stress can be evenly distributed in the transition region between the connected main folding piece 132 and side folding piece 133, thereby improving the connection strength and connection reliability between the connected main folding piece 132 and side folding piece 133, reducing the risk of cracks or cracking occurring in the connection region between the main folding piece 132 and the side folding piece 133, and optimizing the structural strength and service life of the insulating shell 13. Moreover, during assembly of the electrode assembly group 12 and the insulating shell 13, the rounded transition corner 136 can reduce the risk of interference between edges of the insulating shell 13 and the electrode assembly group 12; during assembly of the insulating shell 13 and the housing 11, the rounded transition corner 136 can reduce the risk of interference between edges of the insulating shell 13 and the housing 11. This can reduce the risk of damage to the edges of the insulating shell 13 caused by friction, impact, or shock during assembly, reduce the risk of damage to the insulating shell 13 during assembly, improve the assembly convenience of the insulating shell 13 with the electrode assembly group 12 and the housing 11, and improve the service performance and service life of the insulating shell 13.

Certainly, in other embodiments, the transition corner 136 may be a chamfer.

Referring to FIG. 3 to FIG. 7, based on some of the above embodiments, the embodiments of this application hereby provide a specific example of a battery cell 10. The battery cell 10 includes a housing 11, an electrode assembly group 12, and an insulating shell 13. The electrode assembly group 12 is accommodated in the insulating shell 13, and the electrode assembly group 12 includes a plurality of electrode assemblies 121 arranged side by side. The insulating shell 13 is accommodated in the housing 11. The insulating shell 13 includes a base piece 131, main folding pieces 132, and side folding pieces 133.

The base piece 131 supports the electrode assembly group 12. All corners of the base piece 131 are rounded corners.

Two main folding pieces 132 are provided and are respectively arranged on two opposite sides of the base piece 131 along a first direction a to respectively wrap two opposite sides of the electrode assembly group 12 along the first direction a. Along a second direction b perpendicular to the first direction a, two opposite sides of the insulating shell 13 are first sides 135.

On the first side 135: the two main folding pieces 132 are connected to side folding pieces 133 via transition corners 136. The transition corners 136 are rounded corners. Each transition corner 136 is connected to the main folding piece 132 via a first fold line 1361 and is connected to the side folding piece 133 via a second fold line 1362. The two side folding pieces 133 are a first side folding piece 133a and a second side folding piece 133b. Part of the first side folding piece 133a is folded to an outer side of the second side folding piece 133b, so that the two side folding pieces 133 together wrap a corresponding side of the electrode assembly group 12. On this basis, the first side folding piece 133a can create a pressing effect on the second side folding piece 133b via the part stacked to the outer side of the second side folding piece 133b, thereby enhancing the connection strength between the first side folding piece 133a and the second side folding piece 133b. This helps maintain the shapes of the first side folding piece 133a and the second side folding piece 133b when the electrode assembly group 12 swells, reduces the risk of the first side folding piece 133a and the second side folding piece 133b falling apart or being pushed apart, and allows the first side folding piece 133a and the second side folding piece 133b to reliably, durably, and fully insulate and wrap the corresponding side surface of the electrode assembly group 12. As a result, the insulation wrapping effect of the first side folding piece 133a and the second side folding piece 133b on the corresponding side surface of the electrode assembly group 12 can be optimized, and the insulation effect of the insulating shell 13 between the electrode assembly group 12 and the housing 11 can be optimized. Moreover, in a wrapping state of the insulating shell 13, even if there are machining errors in the dimensions of the electrode assembly group 12, the first side folding piece 133a, and the second side folding piece 133b along the first direction a, the overlapping part between the first side folding piece 133a and the second side folding piece 133b allows the first side folding piece 133a and the second side folding piece 133b to accommodate dimensional deviations within a certain range and to still fully insulate and wrap the corresponding side surface of the electrode assembly group 12, thereby improving the dimensional compatibility, applicability, and reliability of the insulating shell 13.

On the first side 135: the base piece 131 is connected to an extension folding piece 134 via a third fold line 1341. When the insulating shell 13 is in an unfolded state, the third fold line 1341 is located between a straight line on which the first fold line 1361 is located and a straight line on which the second fold line 1362 is located. Along the first direction a, a width d2 of the extension folding piece 134 is equal to a width d3 of the base piece 131 minus a dimension d4 of one corner of the base piece 131 adjacent to the extension folding piece 134 and then minus a dimension d5 of the other corner of the base piece 131 adjacent to the extension folding piece 134, that is, d2 = d3 - d4 - d5. The extension folding piece 134 is folded along the third fold line 1341 to outer sides of the two side folding pieces 133, that is, folded to an outer side of the first side folding piece 133a. The extension folding piece 134 covers a gap between the two side folding pieces 133 and the base piece 131. On this basis, bending of the extension folding piece 134 is facilitated, especially connection and fixation of the extension folding piece 134 to the two side folding pieces 133 are facilitated. This can visually optimize the effect of the extension folding piece 134 covering the gap between the two side folding pieces 133 and the base piece 131, and reduce the risk of the extension folding piece 134 not fully covering the gap. As a result, the folding convenience of the insulating shell 13 can be improved, the structural reliability and structural stability of the insulating shell 13 in a wrapping state can be improved, the risk of the insulating shell 13 falling apart can be reduced, and the insulation effect of the insulating shell 13 between the electrode assembly group 12 and the housing 11 can be optimized. In addition, by folding the extension folding piece 134 to the outer sides of the two side folding pieces 133, the two side folding pieces 133 can reliably, fully, and closely wrap the corresponding side surface of the electrode assembly group 12, allowing the two side folding pieces 133 to better insulate and wrap the corresponding side surface of the electrode assembly group 12.

A corner of the first side folding piece 133a close to the extension folding piece 134 and the second side folding piece 133b is provided with a first notch 1331, and part of the first notch 1331 is exposed outside the extension folding piece 134. On this basis, near the first notch 1331, the first side folding piece 133a, the second side folding piece 133b, and the extension folding piece 134 each have an exposed part, allowing an adhesive structure (for example, an adhesive tape) to run through the first notch 1331 to reliably and securely bond and fix the first side folding piece 133a, the second side folding piece 133b, and the extension folding piece 134.

Along a direction perpendicular to the third fold line 1341, a dimension d1 of the extension folding piece 134 is in a range of 5 mm to 15 mm. On this basis, when the extension folding piece 134 is being folded to the corresponding side surface of the electrode assembly group 12, the gap between the corresponding side folding piece 133 and the base piece 131 can be reliably covered. Moreover, the dimension of the extension folding piece 134 can be correspondingly constrained to reduce the usage amount of adhesive structures (for example, adhesive tapes) used for fixing the extension folding piece 134, and reduce the risk of edge warping of the extension folding piece 134 after fixation.

The extension folding piece 134, a corner of the base piece 131 adjacent to the extension folding piece 134, and the side folding piece 133 adjacent to the extension folding piece 134 together enclose the second notch 1342. On this basis, when the extension folding piece 134 is being folded to the corresponding side surface of the electrode assembly group 12, the pulling effect of the extension folding piece 134 on the adjacent side folding piece 133 can be reduced, thereby optimizing the folding convenience and folding quality of the insulating shell 13 and improving the folding flatness and precision of the extension folding piece 134 and the side folding piece 133. Moreover, the second notch 1342 can be formed by utilizing the dimension of the extension folding piece 134, the corner of the base piece 131, and the side folding piece 133, without requiring additional material removal, thereby improving the formation convenience of the second notch 1342 and optimizing the overall structure of the insulating shell 13. In addition, the provision of the second notch 1342 also helps to reduce stress concentration in regions where the side folding piece 133 is adjacent to the corner of the base piece 131 and the extension folding piece 134, thereby reducing the risk of deformation or rupture in the regions where the side folding piece 133 is adjacent to the corner of the base piece 131 and the extension folding piece 134, and optimizing the structural strength and service life of the insulating shell 13.

Two opposite ends of the first fold line 1361 in its extension direction are spaced apart from respective edge sides of the main folding piece 132. On this basis, by arranging that the first fold line 1361 does not extend through the main folding piece 132 in its extension direction, a strong connection strength can be provided between the main folding piece 132 and the transition corner 136 in a region where the first fold line 1361 does not extend, the connection strength, connection reliability, and durability between the main folding piece 132 and the transition corner 136 can be maintained and improved, and the risk of cracks, cracking, or tearing occurring in the connection region between the main folding piece 132 and the transition corner 136 can be reduced, thereby improving the structural reliability and service life of the insulating shell 13.

Two opposite ends of the second fold line 1362 in its extension direction are spaced apart from respective edge sides of the side folding piece 133. On this basis, by arranging that the second fold line 1362 does not extend through the side folding piece 133 in its extension direction, a strong connection strength can be provided between the side folding piece 133 and the transition corner 136 in a region where the second fold line 1362 does not extend, the connection strength, connection reliability, and durability between the side folding piece 133 and the transition corner 136 can be maintained and improved, and the risk of cracks, cracking, or tearing occurring in the connection region between the side folding piece 133 and the transition corner 136 can be reduced, thereby improving the structural reliability and service life of the insulating shell 13.

Two opposite ends of the third fold line 1341 in its extension direction are spaced apart from respective edge sides of the extension folding piece 134. On this basis, by arranging that the third fold line 1341 does not extend through the extension folding piece 134 in its extension direction, a strong connection strength can be provided between the extension folding piece 134 and the base piece 131 in a region where the third fold line 1341 does not extend, the connection strength, connection reliability, and durability between the extension folding piece 134 and the base piece 131 can be maintained and improved, and the risk of cracks, cracking, or tearing occurring in the connection region between the extension folding piece 134 and the base piece 131 can be reduced, thereby improving the structural reliability and service life of the insulating shell 13.

The extension folding piece 134 is a rectangular structure. On this basis, the shape of the extension folding piece 134 can be regularized, allowing the extension folding piece 134 to have a regular and relatively large surface area to cover a relatively wide region and reliably cover the gap between the corresponding side folding piece 133 and the base piece 131. As a result, the effect of the extension folding piece 134 covering the gap between the side folding piece 133 and the base piece 131 can be optimized, and the risk of the extension folding piece 134 not fully covering the gap can be reduced. Moreover, the extension folding piece 134 with a rectangular structure facilitates processing, folding, and installation.

Referring to FIG. 2 and FIG. 3, some embodiments of this application provide a battery 1, where the battery 1 includes the battery cell 10 according to the embodiments of this application.

With the above solution, the battery 1 can improve the use reliability and service life of each battery cell 10 by applying the battery cell 10 according to the embodiments of this application, thereby improving the use reliability and service life of the battery 1.

Referring to FIG. 1 and FIG. 3, some embodiments of this application provide an electric apparatus, where the electric apparatus includes the battery 1 according to the embodiments of this application or the battery cell 10 according to the embodiments of this application.

With the above solution, the electric apparatus can improve the use reliability and service life of the electric apparatus by applying the battery 1 or the battery cell 10 according to the embodiments of this application.

The foregoing descriptions are merely preferable embodiments of this application, but are not intended to limit this application. Any modification, equivalent replacement, or improvement made without departing from the spirit and principle of this application shall fall within the protection scope of this application.

## Claims

1. A battery cell, wherein the battery cell comprises:
a housing;
an electrode assembly group accommodated in the housing, wherein the electrode assembly group comprises one or more electrode assemblies arranged side by side; and
an insulating shell comprising a base piece, main folding pieces, and side folding pieces, wherein the base piece supports the electrode assembly group, two main folding pieces are provided and are respectively arranged on two opposite sides of the base piece along a first direction to respectively wrap two opposite sides of the electrode assembly group along the first direction; the insulating shell has a first side along a second direction, the second direction being perpendicular to the first direction; and
on the first side: at least one of the main folding pieces is connected to the side folding piece via a transition corner, the side folding piece wraps a corresponding side of the electrode assembly group, the transition corner is connected to the main folding piece via a first fold line and is connected to the side folding piece via a second fold line, the base piece is connected to an extension folding piece via a third fold line; when the insulating shell is in an unfolded state, the third fold line is offset from a straight line on which the first fold line is located, and/or is offset from a straight line on which the second fold line is located; and the extension folding piece is folded to a corresponding side of the electrode assembly group and covers a gap between the corresponding side folding piece and the base piece.

2. The battery cell according to claim 1, wherein when the insulating shell is in an unfolded state, the third fold line is located between the straight line on which the first fold line is located and the straight line on which the second fold line is located.

3. The battery cell according to claim 1 or 2, wherein the extension folding piece is folded to an outer side of the corresponding side folding piece.

4. The battery cell according to any one of claims 1 to 3, wherein on the first side, both of the two main folding pieces are connected to the side folding pieces via the transition corners, and the two side folding pieces together wrap the corresponding side of the electrode assembly group.

5. The battery cell according to claim 4, wherein the extension folding piece is folded to outer sides of the two side folding pieces.

6. The battery cell according to claim 4 or 5, wherein on the first side, the two side folding pieces are a first side folding piece and a second side folding piece, and part of the first side folding piece is folded to an outer side of the second side folding piece.

7. The battery cell according to claim 6, wherein the part of the first side folding piece folded to the outer side of the second side folding piece is provided with a first notch.

8. The battery cell according to claim 7, wherein the extension folding piece is folded to the outer sides of the first side folding piece and the second side folding piece, or the extension folding piece is folded to between the first side folding piece and the second side folding piece; and
the first notch is provided at an end of the first side folding piece close to the extension folding piece, and part of the first notch is exposed outside the extension folding piece.

9. The battery cell according to claim 7 or 8, wherein the first notch is provided at a corner of the first side folding piece close to the extension folding piece.

10. The battery cell according to any one of claims 1 to 9, wherein along a direction perpendicular to the third fold line, a dimension of the extension folding piece is in a range of 5 mm to 15 mm.

11. The battery cell according to any one of claims 1 to 10, wherein a second notch is provided between the extension folding piece and the adjacent side folding piece.

12. The battery cell according to any one of claims 1 to 11, wherein at least one corner of the base piece is a rounded corner.

13. The battery cell according to claim 12, wherein a corner of the base piece adjacent to the extension folding piece is a rounded corner; and
along the first direction, a width of the extension folding piece is equal to a width of the base piece minus dimensions of two corners of the base piece adjacent to the extension folding piece.

14. The battery cell according to claim 13, wherein the extension folding piece, a corner of the base piece adjacent to the extension folding piece, and the side folding piece adjacent to the extension folding piece together enclose the second notch.

15. The battery cell according to any one of claims 1 to 14, wherein at least one end of the first fold line in an extension direction of the first fold line is spaced apart from a corresponding edge side of the main folding piece.

16. The battery cell according to any one of claims 1 to 15, wherein at least one end of the second fold line in an extension direction of the second fold line is spaced apart from a corresponding edge side of the side folding piece.

17. The battery cell according to any one of claims 1 to 16, wherein at least one end of the third fold line in an extension direction of the third fold line is spaced apart from a corresponding edge side of the extension folding piece.

18. The battery cell according to any one of claims 1 to 17, wherein the extension folding piece is a rectangular structure.

19. The battery cell according to any one of claims 1 to 18, wherein the transition corner is a rounded corner.

20. A battery, wherein the battery comprises the battery cell according to any one of claims 1 to 19.

21. An electric apparatus, wherein the electric apparatus comprises the battery according to claim 20, or the battery cell according to any one of claims 1 to 19.
